# DEMANDE DE BREVET EUROPEEN

(11) **EP 2 050 493 A1**
(43) Date de publication de la demande: **22.04.2009**
(21) Numéro de dépôt: 07118908.8
(22) Date de dépôt: 19.10.2007
(51) Int. Cl.: B01J 8/18, B01J 8/24, B01J 8/38

(54) **Dispositif d'évacuation de fluide d'un réacteur à lit fluidifié rotatif avec refoulement des particules solides**

(71) Demandeur: TOTAL PETROCHEMICALS RESEARCH FELUY, 7181 Seneffe (Feluy) (BE)
(72) Inventeur: de Broqueville, Axel, 1390 GREZ-DOICEAU (BE)

(57) **Abrégé**

La présente invention se rapporte à un dispositif d'évacuation du ou des fluides, gazeux ou liquides, qui ont traversé un lit fluidifié tournant à l'intérieur d'une chambre annulaire permettant, grâce à la force centrifuge, de refouler vers le dit lit fluidifié les particules solides qui ont été entraînées par le ou les dits fluides au travers des ouvertures de sortie du dit dispositif. La présente invention se rapporte également à un procédé de refoulement centrifuge de particules solides qui ont été entraînées pendant l'évacuation du ou des fluides, gazeux ou liquides, qui ont traversé un lit fluidifié tournant à l'intérieur d'une chambre annulaire. La présente invention se rapporte aussi à l'utilisation d'un dispositif selon la présente invention dans des procédés de polymérisation catalytique, de séchage, d'imprégnation, d'enrobage, de combustion, de gazéification, de classification ou d'autres traitements de particules solides en suspension dans un lit fluidifié rotatif, ou de craquage, de déshydrogénation ou d'autres transformations catalytiques de fluides.

## Description

### Domaine technique de l'invention

La présente invention se rapporte à un lit fluidifié rotatif comprenant un dispositif d'évacuation du ou des fluides, gazeux ou liquides, qui ont traversé un lit fluidifié tournant à l'intérieur d'une chambre annulaire. En particulier le dispositif d'évacuation du ou des fluides permet, grâce à la force centrifuge ou d'inertie, de refouler vers le dit lit fluidifié les particules solides qui ont été entraînées par le ou les dits fluides évacués.

La présente invention se rapporte également à un procédé de refoulement centrifuge de particules solides qui ont été entraînées pendant l'évacuation du ou des fluides, gazeux ou liquides, qui ont traversé un lit fluidifié tournant à l'intérieur d'une chambre annulaire.

La présente invention se rapporte aussi à des procédés de polymérisation catalytique, de séchage, d'imprégnation, d'enrobage, de combustion, de gazéification, de classification ou d'autres traitements de particules solides en suspension dans un lit fluidifié rotatif, ou de craquage, de déshydrogénation ou d'autres transformations catalytiques de fluides utilisant le dispositif selon la présente invention.

### Arrière plan technologique de l'invention

Un lit fluidifié tournant à l'intérieur d'une chambre annulaire fixe contenant des particules solides peut être obtenu en injectant un fluide, gazeux ou liquide, au travers d'ouvertures d'entrée réparties autour de la paroi circulaire extérieure de la dite chambre annulaire dans une direction principalement tangentielle à la dite paroi circulaire extérieure et en évacuant le dit fluide par une ou des ouvertures de sortie le long de la paroi circulaire intérieure de la dite chambre annulaire. Un tel procédé est décrit dans la demande de brevet WO 2006/063964 déposée le 15 décembre 2004 au nom du même inventeur.

Dans ces procédés, le fluide évacué entraîne des particules solides au travers des ouvertures de sortie. Ces pertes de particules solides peuvent être importantes le long des parois latérales de la chambre annulaire et aussi lorsque le fluide peut se frayer des passages préférentiels vers la ou les sorties. Afin d'éviter les concentrations anormales de particules solides dans les zones où les flux de fluides sont réduits, des étranglements non aérodynamiques peuvent être installés au travers des ouvertures d'entrée de fluide. Ceci permet d'augmenter très fortement la chute de pression résultant d'une augmentation de la vitesse et donc du débit du fluide au travers des ouvertures localisées dans les zones où il y a peu de particules solides et donc d'augmenter le débit de fluide dans les zones où les particules solides ont tendance à s'accumuler et donc de les disperser. Ce dispositif, permettant de mieux répartir les flux de fluide et de manière plus stable, et donc de réduire les pertes de particules solides, est décrit dans la demande de brevet WO 2006/063965 déposée par TOTAL le 15 décembre 2004 au nom du même inventeur.

Malgré ces améliorations, les pertes de particules solides peuvent encore être significatives, par exemple lorsque la quantité de particules solides contenues dans la chambre annulaire est élevée ou lorsque leurs tailles ont une distribution large.

La présente invention permet de réduire les pertes de particules solides en les refoulant vers le lit fluidifié.

### Sommaire de l'invention

La présente invention se rapporte à un lit fluidifié rotatif comprenant un dispositif d'évacuation du ou des fluides, gazeux ou liquides, qui ont traversé un lit fluidifié tournant à l'intérieur d'une chambre annulaire.

Plus particulièrement, la présente invention se rapporte à un dispositif à lit fluidifié rotatif comprenant :
- un réacteur comprenant au moins une chambre annulaire contenant des particules solides délimitée par une paroi circulaire extérieure, une paroi circulaire intérieure et deux côtés latéraux;
- un dispositif d'alimentation de particules solides dans la dite chambre annulaire et un dispositif d'évacuation de particules solides de la dite chambre annulaire au travers d'une ou de plusieurs de ses parois circulaires et/ou latérales;
- un dispositif d'alimentation d'un ou plusieurs fluides, gazeux ou liquides, comprenant des ouvertures d'entrée de fluide réparties le long de ladite paroi circulaire extérieure, et;
- un dispositif d'évacuation du ou des dits fluides comprenant au moins une ouverture de sortie de fluide le long de la dite paroi circulaire intérieure, de préférence orientée dans la direction de rotation du ou des fluides à l'intérieur de la dite chambre annulaire avec une composante radiale dirigée vers le centre (vers le dispositif central d'évacuation),
caractérisé en ce que la dite paroi circulaire intérieure comprend au moins une ouverture de refoulement, qui est de préférence située en aval de ladite au moins une ouverture de sortie, et de préférence orientée vers ladite chambre annulaire, de préférence dans le sens de la dite direction de rotation avec une composante radiale dirigée vers l'extérieur (vers la chambre annulaire).

La ou les ouvertures d'entrée de fluide réparties le long de ladite paroi circulaire extérieure ont une orientation permettant d'injecter le ou les dits fluides dans une direction principalement tangentielle à ladite paroi circulaire extérieure et donc de faire tourner le ou les dits fluides le long de la dite paroi circulaire extérieure à l'intérieur de la dite chambre annulaire.

La ou les dites ouvertures de sortie de fluide permettent d'évacuer centralement le ou les dits fluides provenant de la dite chambre annulaire au travers de la ou des dites ouvertures de sortie. La ou les dites ouvertures de refoulement permettent de refouler à l'intérieur de la dite chambre annulaire les particules solides qui ont été entraînées par le fluide évacué.

En particulier le dispositif d'évacuation du ou des fluides selon l'invention permet, grâce à la force centrifuge ou d'inertie, de refouler vers le dit lit fluidifié les particules solides qui ont été entraînées par le ou les dits fluides. Le reflux de solides est une amélioration qui permet de réduire les pertes de solides et donc d'augmenter la concentration des solides qui, entraînés par le ou les fluides, tournent à l'intérieur de la chambre annulaire.

De plus, le dispositif selon l'invention permet aussi de prélever les particules solides dans les zones de la chambre annulaire où la concentration est élevée et de les refouler vers les zones de faible concentration et donc d'assurer une circulation longitudinale des particules solides tout en réduisant les différences de concentration. Il permet donc d'obtenir un lit fluidifié rotatif mieux réparti tout le long de la paroi circulaire extérieure et de s'opposer à la formation de lits fluidifiés rotatifs toroïdaux séparés par des chenaux annulaires où la concentration des particules solides est très faible et par où le fluide peut sortir plus facilement, tout en réduisant les pertes de particules solides provenant des zones de forte concentration.

Selon un mode particulier de réalisation la présente invention se rapporte à un dispositif à lit fluidifié rotatif caractérisé en ce que le dit dispositif d'alimentation du ou des dits fluides comprend une chambre circulaire (ou chambre d'alimentation) entourant ladite chambre annulaire.

Selon un mode particulier de réalisation la présente invention se rapporte à un dispositif à lit fluidifié rotatif caractérisé en ce que le dit dispositif d'évacuation du ou des dits fluides comprend au moins un tube central d'évacuation pénétrant à l'intérieur de l'espace central délimité par la dite paroi circulaire intérieure.

Selon un autre mode particulier de réalisation la présente invention se rapporte à un dispositif à lit fluidifié rotatif caractérisé en ce que le dit dispositif d'évacuation du ou des dits fluides comprend au moins un autre tube central d'évacuation pénétrant à l'intérieur du dit espace central par le côté opposé du dit espace central, leurs extrémités se faisant face.

Selon un autre mode particulier de réalisation la présente invention se rapporte à un dispositif à lit fluidifié rotatif caractérisé en ce qu'au moins un des dits tubes centraux pénétrant dans le dit espace central a une extrémité évasée.

Selon un autre mode particulier de réalisation la présente invention se rapporte à un dispositif à lit fluidifié rotatif caractérisé en ce que le dit dispositif d'évacuation de fluide comprend un tube central d'évacuation qui traverse le dit espace central délimité par la dite paroi circulaire intérieure et qui comprend une ou plusieurs ouvertures d'évacuation.

Selon un autre mode particulier de réalisation la présente invention se rapporte à un dispositif à lit fluidifié rotatif caractérisé en ce que les dites ouvertures d'évacuation sont orientées dans le même sens que les dites ouvertures de sortie.

Selon un autre mode particulier de réalisation la présente invention se rapporte à un dispositif à lit fluidifié rotatif caractérisé en ce que le dit espace central délimité par la dite paroi circulaire intérieure est divisée en au moins deux tronçons annulaires par au moins une paroi transversale.

Selon un autre mode particulier de réalisation la présente invention se rapporte à un dispositif à lit fluidifié rotatif caractérisé en ce que le dit espace central délimité par la dite paroi circulaire intérieur contient une roue à aubes pouvant tourner dans le même sens que le sens de rotation du ou des dits fluides et des particules solides à l'intérieur de la dite chambre annulaire. De préférence, la dite roue à aubes est actionnée par un arbre de transmission pénétrant dans ou traversant le dit espace central.

Selon un autre mode particulier de réalisation la présente invention se rapporte à un dispositif à lit fluidifié rotatif caractérisé en ce qu'au moins un tronçon annulaire de la dite paroi circulaire intérieure comprend au moins une dite ouverture de sortie et au moins une dite ouverture de refoulement.

Selon un autre mode particulier de réalisation la présente invention se rapporte à un dispositif à lit fluidifié rotatif caractérisé en ce que au moins un tronçon annulaire de la dite paroi circulaire intérieure ne comprend qu'une ou plusieurs ouvertures de sortie (mais ne comprenant pas d'ouvertures de refoulement) et au moins un autre tronçon annulaire de la dite paroi circulaire intérieur ne comprend qu'une ou plusieurs ouvertures de refoulement (mais ne comprenant pas d'ouvertures de sortie).

Selon un autre mode particulier de réalisation la présente invention se rapporte à un dispositif à lit fluidifié rotatif caractérisé en ce que qu'il comprend au moins une ouverture d'évacuation dans un tronçon annulaire ne comprenant pas d'ouvertures de sortie.

Selon un autre mode particulier de réalisation la présente invention se rapporte à un dispositif à lit fluidifié rotatif caractérisé en ce que la paroi circulaire intérieure est bombée, sa partie large étant dans un tronçon annulaire qui comprend au moins une ouverture de refoulement et qui ne comprend pas d'ouverture de sortie.

La présente invention se rapporte également à des procédés de polymérisation catalytique, de combustion, de gazéification, de classification, de séchage, d'imprégnation, d'enrobage ou d'autres traitements de particules solides en suspension dans le lit fluidifié rotatif, ou de craquage, de déshydrogénation ou d'autre transformation catalytique de fluides utilisant ce dispositif. La présente invention se rapporte aussi à l'utilisation d'un dispositif selon la présente invention dans tels procédés.

La présente invention se rapporte également à un procédé de refoulement centrifuge de particules solides qui ont été entraînées pendant l'évacuation du ou des fluides, gazeux ou liquides, qui ont traversé un lit fluidifié tournant à l'intérieur d'une chambre annulaire.

Le dispositif et procédé selon la présente invention permettent de diminuer le nombre de particules solides, qui sont entraînées avec les fluides évacués d'un dispositif (réacteur) à lit fluidifié rotatif. Des particules solides entraînées par le ou les fluides évacués du lit fluidifié rotatif sont refoulées grâce à la force centrifuge ou d'inertie vers le lit fluidifié par des ouvertures de refoulement, situées en aval d'ouvertures de sortie le long de la paroi intérieure de la chambre annulaire du dispositif. Le dispositif et procédé selon la présente invention permettent donc d'augmenter la concentration (moyenne) de particules solides dans le dispositif à lit fluidifié et d'améliorer la stabilité et l'uniformité du lit fluidifié rotatif. Le dispositif et procédé selon la présente invention permettent donc aussi d'influencer de manière indirecte le temps de résidence de particules solides dans le lit fluidifié, le comportement du lit fluidifié rotatif, et les régimes selon lesquelles la chambre annulaire peut être actionnée.

D'autres caractéristiques et exemples de dispositifs suivant la présente invention sont décrits ci-dessous de façon non limitative.

### Brève description des dessins

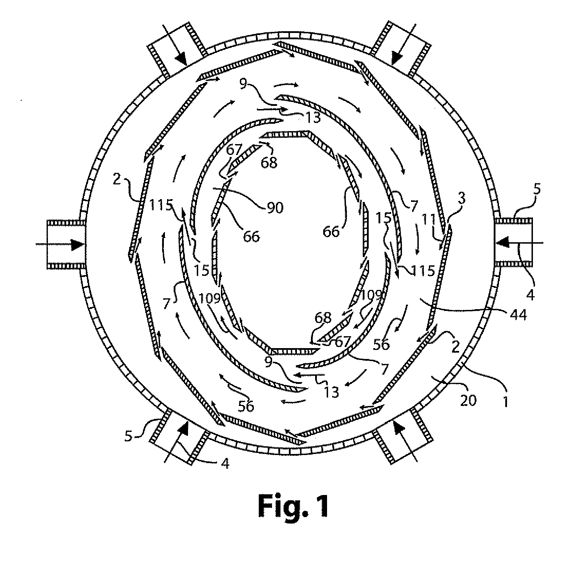

La **figure 1** représente une section transversale schématique d'un exemple d'un dispositif à lit fluidifié rotatif comprenant une chambre annulaire (44) de forme elliptique, dont la paroi circulaire intérieure (7) comprend une succession d'ouvertures de sortie (9) et d'ouvertures de refoulement (15). Un tube central d'évacuation (16) pénètre à l'intérieur de l'espace central délimité par la paroi circulaire intérieure (7) de la chambre annulaire (44).

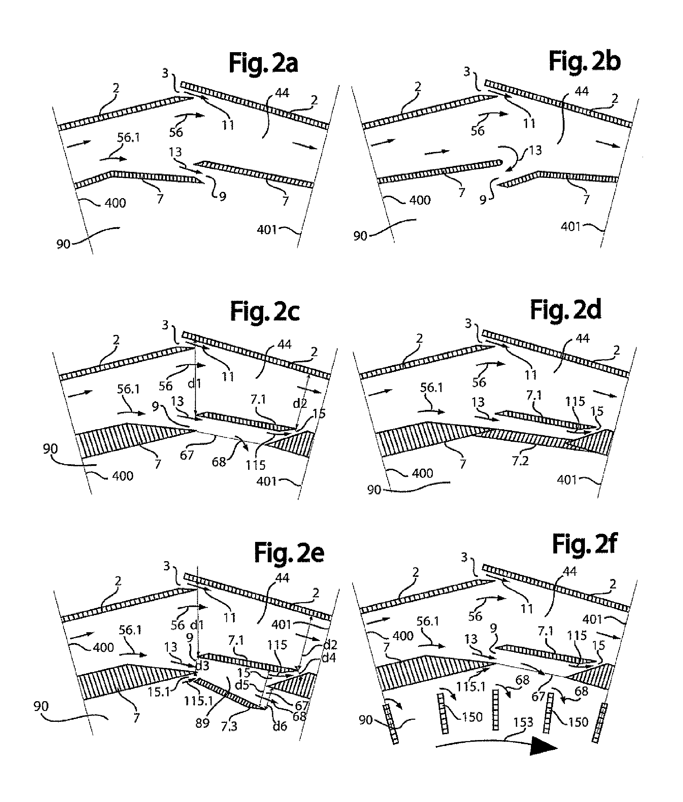

Les **figures 2a****-f** montrent des sections transversales schématiques d'une partie (1/12ieme) d'un réacteur selon l'invention illustrant différents dispositifs d'évacuation de fluide selon l'invention.

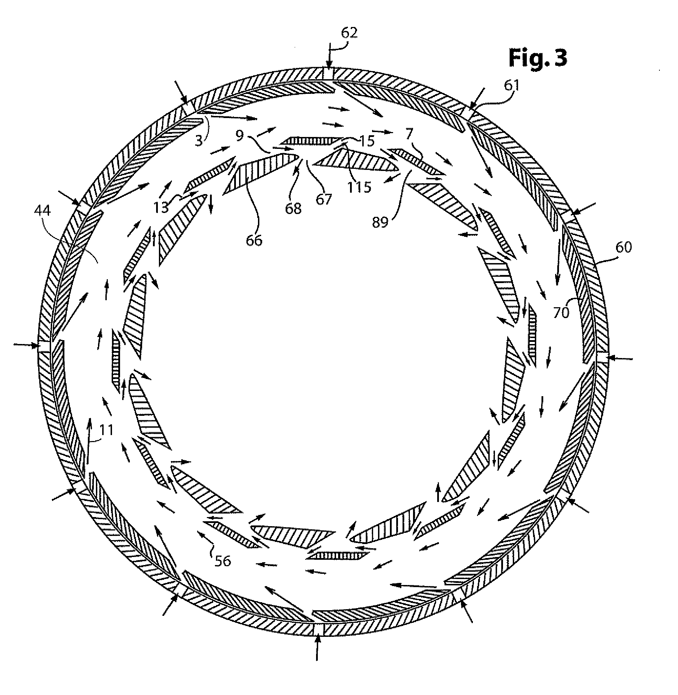

La **figure 3** montre une section transversale schématique d'un exemple de chambre annulaire (44) dont la paroi circulaire intérieure (7) et le tube central d'évacuation (16) sont constitués d'une succession d'éléments ou parois (7) et (66) délimitant une succession d'ouvertures de sortie (9) et d'ouvertures de refoulement (15) et dont les ouvertures d'évacuation (67) sont orientées dans une direction partiellement opposée à la direction des ouvertures de sortie (7).

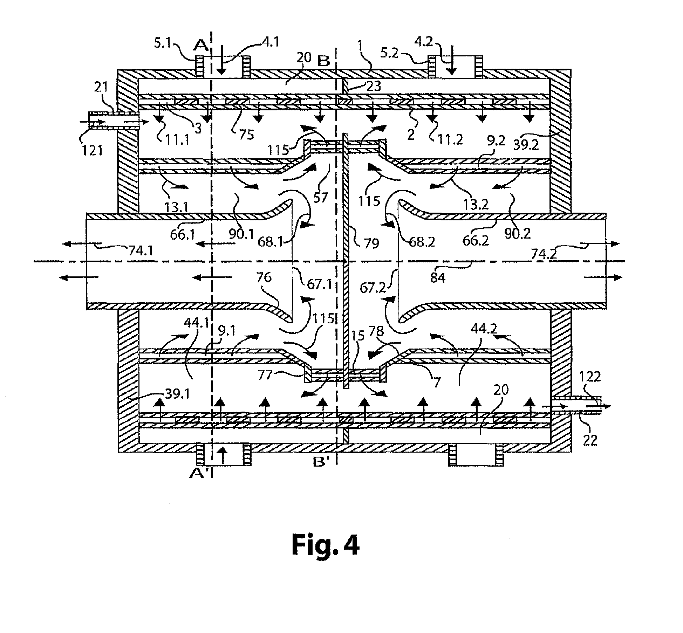

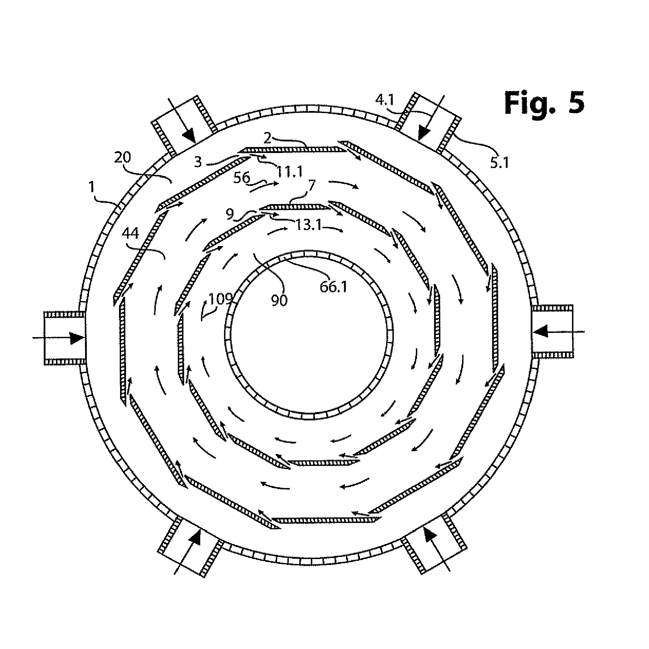

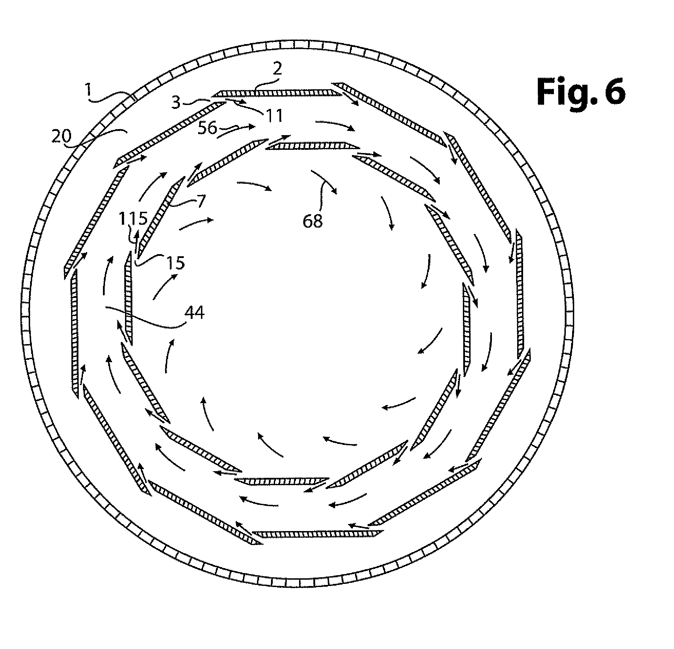

Les **figures** de **4** à **6** décrivent un autre mode de réalisation dans lequel les ouvertures de sortie et les ouvertures de refoulement sont situées dans des tronçons annulaires séparés de la chambre annulaire. La **figure 4** est un exemple d'une section axiale ou longitudinale d'un dispositif à lit fluidifié rotatif comprenant une chambre annulaire (44.1, 44.2) dont les ouvertures de sortie (9.1, 9.2) et les ouvertures de refoulement (15) sont localisées dans des tronçons annulaires séparés. Deux tubes centraux d'évacuation (66.1, 66.2) se faisant face pénètrent à l'intérieur de l'espace central délimité par la paroi circulaire intérieure (7) de la chambre annulaire. La **figure 5** est un exemple d'une section transversale, selon le plan AA', du dispositif décrit dans la figure 3. La **figure 6** est un exemple d'une section transversale, selon le plan BB', du dispositif décrit dans la figure 3.

La **figure 7** est un autre exemple d'une section axiale ou longitudinale d'un dispositif à lit fluidifié rotatif comprenant une paroi circulaire intérieure (7) divisée en plusieurs tronçons annulaires et une roue à aubes (150) pouvant tourner à l'intérieur de l'espace central.

La **figure 8** illustre une section transversale schématique d'une partie d'un réacteur comprenant un dispositif d'évacuation de fluides selon la présente invention.

La **figure 9** illustre une section transversale schématique de 2/12ème d'une chambre annulaire à symétrie cylindrique périodique de 30° comprenant des déflecteurs creux ou ailerons (85) avec une ouverture d'injection (86) de fluide (87).

### Description détaillée

### DISPOSITIF

L'invention se rapporte à un dispositif à lit fluidifié rotatif comprenant :
- un réacteur comprenant au moins une chambre annulaire contenant des particules solides délimitée par une paroi circulaire extérieure, une paroi circulaire intérieure et deux côtés latéraux;
- un dispositif d'alimentation de particules solides dans la dite chambre annulaire et un dispositif d'évacuation de particules solides de la dite chambre annulaire au travers d'une ou de plusieurs de ses parois circulaires et/ou latérales;
- un dispositif d'alimentation d'un ou plusieurs fluides, gazeux ou liquides, comprenant des ouvertures d'entrée de fluide réparties le long de ladite paroi circulaire extérieure, permettant d'injecter un ou plusieurs fluides dans la dite chambre annulaire au travers des dites ouvertures d'entrée dans une direction principalement tangentielle à la dite paroi circulaire extérieure, et donc de faire tourner le ou les dits fluides et les particules solides contenues à l'intérieur de la dite chambre annulaire dans le sens d'injection du ou des dits fluides;
- un dispositif d'évacuation du ou des dits fluides comprenant au moins une ouverture de sortie de fluide le long de la dite paroi circulaire intérieure, orientée dans la direction de rotation du ou des fluides et des particules solides à l'intérieur de la dite chambre annulaire, et permettant d'évacuer centralement le ou les dits fluides provenant de la dite chambre annulaire au travers de la ou des dites ouvertures de sortie;
caractérisé en ce que la dite paroi circulaire intérieure comprend également au moins une ouverture de refoulement, située en aval de ladite au moins une ouverture de sortie et orientée vers la dite chambre annulaire, permettant de refouler à l'intérieur de la dite chambre annulaire les particules solides qui ont été entraînées par le fluide évacué et qui glissent en tournant le long de la surface intérieure de la paroi circulaire intérieure, sous l'effet de la force centrifuge ou d'inertie.

La présente invention comprend donc un dispositif d'évacuation d'un ou plusieurs fluides au travers d'une ou plusieurs ouvertures de sortie disposées le long de la paroi circulaire intérieure d'une chambre annulaire contenant des particules solides et un dispositif d'alimentation du ou des dits fluides au travers d'ouvertures d'entrée le long de la paroi circulaire extérieure de la dite chambre annulaire, permettant d'injecter le ou les dits fluides dans une direction principalement tangentielle à la dite paroi circulaire extérieure et donc de faire tourner les dites particules solides qui sont repoussées par la force centrifuge vers la dite paroi circulaire extérieure et ainsi de former un lit fluidifié rotatif traversé par le ou les dits fluides.

L'invention est caractérisée en ce que la ou les dites ouvertures de sortie sont orientées dans le sens de rotation du dit lit fluidifié avec une composante radiale dirigée vers le dispositif central d'évacuation (vers le centre) et en ce que la paroi circulaire intérieure comprend aussi une ou des ouvertures de refoulement situées en aval d'ouvertures de sortie et orientées dans le même sens, mais avec une composante radiale dirigée vers la chambre annulaire (vers l'extérieur), afin de pouvoir réintroduire dans la dite chambre annulaire, grâce à leur inertie, les particules solides qui ont été entraînées par le ou les dits fluides au travers des dites ouvertures de sortie et qui, repoussées par la force centrifuge, glissent le long de la surface intérieure de la dite paroi circulaire intérieure, ce qui veut dire du côté du centre de la dite paroi circulaire intérieure.

Le dispositif à lit fluidifié rotatif selon la présente invention comprend un réacteur comprenant au moins une chambre annulaire contenant des particules solides. Le terme « **chambre annulaire** » se réfère à une chambre à l'intérieur du réacteur délimitée par deux parois circulaires concentriques et des côtés latéraux. Selon un mode de réalisation préféré de la présente invention, la chambre annulaire est fixe, ce qui veut dire que les parois circulaires extérieure et intérieure de la chambre annulaire sont fixes.

La paroi circulaire intérieure délimite un espace centrale qui peut être appelée la chambre d'évacuation des fluides ou cheminée centrale. Les termes « **espace central** », « **cheminée centrale** » ou « **chambre d'évacuation des fluides** » sont utilisés dans certains modes de réalisation de la présente invention comme synonymes et se réfèrent à un dispositif permettant d'évacuer centralement le ou les fluides de ladite chambre annulaire. Le mot central signifie que ce dispositif n'est pas en contact direct avec la paroi circulaire extérieure de ladite chambre annulaire.

Un ou plusieurs tubes, chacun pouvant être appelé « **tube central d'évacuation** », peuvent pénétrer à l'intérieur de la dite chambre d'évacuation des fluides ou ladite cheminée centrale. Le tube central d'évacuation est pourvu d'une paroi circulaire. Selon un mode de réalisation préféré de la présente invention, le tube central d'évacuation est fixe, ce qui veut dire que sa paroi circulaire est fixe.

Le terme « **paroi circulaire**» est utilisé pour indiquer une paroi qui peut être de forme générale cylindrique, elliptique, conique ou polygonale ou avoir une autre forme avec des courbures diverses pouvant comprendre des parties concaves. Par exemple sa surface intérieure peut être polygonale ou ondulée et la forme de ses sections transversales peut être elliptique ou même avoir la forme de la section d'un oeuf ou d'une banane. Sa section transversale ne doit pas nécessairement être constante. Par exemple elle peut diminuer progressivement. Dans ce cas, si elle est cylindrique ou polygonale, on peut la définir comme formant un cône ou une pyramide tronquée.

Selon un mode de réalisation préféré de la présente invention, les parois circulaires sont fixes.

Le terme «**ouverture d'entrée** (3)» se réfère à une ouverture au travers de la paroi circulaire extérieure de la chambre annulaire par où un fluide peut pénétrer à l'intérieur de ladite chambre annulaire. Ce passage ou ouverture d'injection peut avoir une forme quelconque, par exemple un tube cylindrique ou de section polygonale. Il est de préférence de forme allongée dans la direction longitudinale (perpendiculaire au plan de rotation). Dans ce cas on parle de « fente d'injection ». Les termes « ouvertures d'entrée », « injecteurs », « ouverture d'injection » ou « fente d'injection » sont utilisés dans certains modes de réalisation de la présente invention comme synonymes.

La localisation des ouvertures d'entrée est choisie en fonction des résultats que l'on désire obtenir. Par exemple si la forme de la surface intérieure de la paroi extérieure de la chambre annulaire a une courbure variant progressivement, comme dans une ellipse, ou est ondulée, il en résulte des zones où la pression des particules solides sur cette surface est plus élevée (là où la courbure est forte et convexe) ou plus faible (là où elle est faible ou concave), et donc la localisation des ouvertures d'entrée dans l'une ou l'autre zone influencera la quantité d'énergie qui est conférée aux particules solides.

Le terme «**ouverture de sortie** (9) » se réfère à une ouverture au travers de la paroi circulaire intérieure de la chambre annulaire par où un fluide peut pénétrer à l'intérieur de ladite chambre d'évacuation (cheminée centrale). Ce passage ou ouverture de sortie peut avoir une forme quelconque, par exemple un tube cylindrique ou de section polygonale. Il peut être de forme allongée dans la direction longitudinale (perpendiculaire au plan de rotation).

Le terme « **ouverture de refoulement** (15) » se réfère à une ouverture au travers de la paroi circulaire intérieure de la chambre annulaire par où les particules solides qui ont été entraînées par le ou les dits fluides évacués peuvent être refoulées vers la chambre annulaire. Ce passage ou ouverture de refoulement peut avoir une forme quelconque, par exemple un tube cylindrique ou de section polygonale. Il peut être de forme allongée dans la direction longitudinale (perpendiculaire au plan de rotation).

Le terme «**ouverture d'évacuation (67)** » se réfère à une ouverture au travers de la paroi circulaire ou de l'extrémité d'un tube central d'évacuation par où le fluide qui a traversé une ouverture de sortie (9) peut pénétrer à l'intérieur dudit tube d'évacuation. Ce passage ou ouverture d'évacuation peut avoir une forme quelconque, par exemple un tube cylindrique ou de section polygonale. Il peut être de forme allongée dans la direction longitudinale (perpendiculaire au plan de rotation)

Par "**orientation d'une ouverture**" on entend la direction dans laquelle un ou des fluides et/ou des particules solides passent (coulent) au travers de cette ouverture, Cette direction est généralement perpendiculaire au plan de l'ouverture et le sens de l'écoulement est déterminé par le dispositif d'alimentation ou d'évacuation du ou des fluides. Selon l'invention, la direction normale dans laquelle le fluides et/ou les solides passent ou coulent au travers des ouvertures d'entrée et de refoulement est dirigée vers la chambre annulaire et la direction normale de l'écoulement du ou des fluides au travers des ouvertures de sortie et d'évacuation est dirigée vers l'espace central ou le ou les tubes d'évacuation.

Selon l'invention, les ouvertures de sortie, d'évacuation et de refoulement ont de préférence une composante tangentielle dirigée dans le même sens que le sens de rotation du ou des fluides et des particules solides dans le lit fluidifié (et à l'intérieur de la dite chambre annulaire), c'est-à-dire dans le sens de l'injection du fluide au travers des ouvertures d'entrée, avec une composante radiale dirigée vers le centre pour les ouvertures de sortie et d'évacuation ou vers l'extérieur pour les ouvertures de refoulement. Toutefois, la direction d'écoulement du fluide au travers des ouvertures de sortie ou d'évacuation peut avoir une composante tangentielle dirigée dans le sens opposé au sens de rotation du lit fluidifié, ce qui impose au fluide un changement de direction très prononcé, ce qui augmente la force centrifuge et donc la séparation des particules solides et du fluide, mais aussi la chute de pression nécessaire à l'évacuation du fluide.

Par une « **ouverture orientée dans la direction de rotation** » du fluide et des particules solides est entendue une ouverture qui permet au dit fluide et particules solides de passer au travers de cette ouverture dans une direction ayant une composante tangentielle orientée dans la même direction que la direction de rotation du fluide et des particules solides dans le lit fluidifié.

Par une « **ouverture orientée dans la direction opposée au sens de rotation** » du fluide et des particules solides est entendue une ouverture qui permet au dit fluide et particules solides de passer au travers de cette ouverture dans une direction dont la composante tangentielle est opposée ou inverse, à la direction de rotation du fluide et des particules solides dans le lit fluidifié.

La ou les dites ouvertures de refoulement sont orientées dans le sens de rotation du dit lit fluidifié dans une même direction que la direction de rotation du fluide et des particules solides dans le lit fluidifié. De préférence la direction d'écoulement (de refoulement) des particules solides au niveau des ouvertures de refoulement a une composante radiale dirigée vers l'extérieur du dispositif à lit fluidifié rotatif. Les ouvertures de refoulement sont donc de préférence orientées afin de permettre l'écoulement des particules solides dans une direction ayant une composante radiale dirigée vers l'extérieur, c'est-à-dire vers la paroi circulaire extérieure de la chambre annulaire.

La direction de l'écoulement des fluides et des particules solides à travers les ouvertures de sorties et la direction de l'écoulement des particules solides à travers les ouvertures de refoulement peut également être contrôlée par l'orientation de la paroi intérieure de la chambre annulaire et/ou par la forme (la courbure) de sa surface intérieure et/ou extérieure.

De préférence la surface extérieure de la paroi circulaire intérieure en amont des ouvertures de sortie est courbée vers l'espace central et la surface intérieure de la paroi circulaire intérieure en amont des ouvertures de refoulement est dirigée vers la chambre annulaire.

Le présent dispositif comprend une **chambre annulaire** contenant des particules solides délimitée par une paroi circulaire extérieure, une paroi circulaire intérieure et deux côtés latéraux. Selon un mode particulier de réalisation la section transversale de la chambre annulaire peut être choisie parmi les cercles, les polygones, les ellipses et les autres formes de courbures variables, afin de faire varier la force centrifuge sur les particules solides qui tournent le long de cette surface.

Dans la présente invention, la surface des sections transversales de la chambre annulaire peut être constante ou varier progressivement ou par palier afin de faire varier l'épaisseur du lit fluidifié. Par exemple la dite paroi circulaire extérieure peut être évasée ou bombée ou conique et/ou la dite paroi circulaire intérieure peut être bombée ou évasée ou conique. Suivant les cas, la section transversale de la dite chambre annulaire peut être maximum à ses extrémités ou le long d'un de ses côtés ou en un ou plusieurs endroits situés entre ses extrémités. La section transversale au milieu de ladite chambre annulaire peut être plus grand ou plus petit que la surface transversale d'un de ses côtés.

Pour des réacteurs de grandes dimensions et/ou la présence de microparticules et/ou l'utilisation d'un fluide de densité proche de celle des solides, la séparation fluide/solides peut s'avérer difficile. Pour y remédier il est préférable d'utiliser un réacteur dont la section transversale n'est pas un cercle, mais dont la courbure variable a un rayon de petite dimension à proximité de la ou des sorties du fluide qui peut également se faire dans la direction opposée au sens de rotation du lit fluidifié afin d'augmenter davantage la force centrifuge. Le choix des formes est influencé entre autre par le volume de la chambre de réaction; le débit du fluide et la vitesse d'entrée maximum; la dimension de la cheminée centrale d'évacuation du ou des fluides; la force centrifuge nécessaire pour séparer les solides du fluide et la vitesse maximum des solides, le niveau acceptable de pertes de solides par la cheminée; le besoin de refroidir les surfaces latérales (épaisseur du lit fluidifié).

Par exemple, pour améliorer la séparation du fluide et des particules solides de petites dimensions, la chambre annulaire peut avoir une section transversale elliptique vertical avec une ouverture d'entrée située là où la courbure est la plus forte, de préférence dans le bas, et une ouverture de sortie située du côté opposé de préférence en aval de la plus forte courbure, l'ouverture de refoulement se trouvant en aval de l'ouverture de sortie. Dans d'autres exemples, dans le cas où il y a un débit de fluide élevé la chambre annulaire peut avoir une section transversale elliptique horizontale et comprendre plusieurs ouvertures entrées et deux ouvertures de sorties situées chacune en aval de la plus forte courbure, ou une forme en section transversale de carré courbé et avoir plusieurs ouvertures d'entrées et quatre ouvertures de sorties situées chacune en aval des quatre sommets.

Selon un mode de réalisation particulier, la surface intérieure de ladite paroi circulaire extérieure est polygonale. Une paroi de forme polygonale permet une réalisation aisée par assemblage d'éléments plats accolés les uns aux autres ainsi qu'une injection de fluide tangentielle à la partie située en aval des injecteurs. Cette surface peut aussi avoir une courbure concave, ce qui donne un aspect ondulé à la surface intérieure de la paroi circulaire. Dans ce cas les injecteurs de fluide se trouvent préférentiellement à l'extrémité de la courbure concave de la surface située en amont afin de réduire et mieux répartir la concentration des solides en amont des injecteurs. La forme polygonale permet d'obtenir le même résultat, si la surface en amont des injecteurs est pliée pour lui donner une forme concave, c'est-à-dire avec un angle intérieur de plus de 180°.

La forme de la surface intérieure de la paroi circulaire extérieure est choisie en fonction des résultats souhaités. Par exemple si la forme de la surface en amont des injecteurs est convexe, la pression des particules solides avant d'entrer en contact avec le fluide injecté en aval est plus élevée que la pression le long d'une surface concave et l'énergie dépensée par le fluide dans le lit fluidifié est d'autant plus élevée que la pression des particules solides sur les jets de fluide est élevée.

Dans la présente invention, la chambre annulaire peut être divisée en plusieurs tronçons (sections) annulaires traversés par des fluides de compositions et/ou à des températures et/ou à des débits et vitesses variables, lesdits fluides étant alimentés et évacués séparément. Par exemple, un dispositif peut être prévu, comprenant au moins deux dites chambres annulaires successives, lesdites particules solides évacuées d'une desdites chambres circulaires successives étant alimentées dans la suivante. Ceci peut être particulièrement avantageux dans beaucoup d'applications. Par exemple pour les procédés de polymérisation, les particules catalytiques solides, en polymérisant, grossissent progressivement en passant au travers des sections successives et leur activité catalytique diminue progressivement. Cette évolution de l'activité et de la granulométrie des particules catalytiques peut être compensée en adaptant d'une section à l'autre, la vitesse d'injection, le débit, la température et la composition du fluide qui traverse le lit fluidifié et en augmentant progressivement ou par palier le diamètre de la paroi circulaire, afin d'augmenter l'épaisseur et donc le volume et donc le temps de résidence des particules catalytiques et du fluide qui traverse le lit fluidifié. Pour la gazéification de particules solides carbonées (bio masses, charbon, etc.), la taille des particules va en diminuant et l'activité liée au rapport masse/surface va en augmentant. Dans ce cas il est possible de diminuer progressivement le diamètre de la chambre circulaire en lui donnant une forme légèrement conique afin de réduire progressivement l'épaisseur du lit fluidifié.

Le présent dispositif à lit fluidifié rotatif comprend également un **dispositif d'alimentation d'un ou plusieurs fluides**, gazeux ou liquides, comprenant des ouvertures d'entrée de fluide réparties le long de ladite paroi circulaire extérieure, permettant d'injecter un ou plusieurs fluides dans la dite chambre annulaire au travers des dites ouvertures d'entrée et de faire tourner le ou les dits fluides et les particules solides contenues à l'intérieur de la dite chambre annulaire dans le sens d'injection du ou des dits fluides.

Les ouvertures d'entrée permettent d'injecter le fluide dans une direction dont la composante principale est tangentielle et de préférence supérieure au double de la composante radiale ou longitudinale. De préférence, la direction d'injection forme un angle aigu, de préférence un angle inférieur ou égal à 30° avec la tangente à la paroi circulaire du côté situé en aval desdits injecteurs de fluide.

Que le fluide soit injecté sous la forme de films minces ou de jets de fluide, si sa vitesse d'injection est très élevée, lorsque les particules solides qui longent la paroi circulaire entrent en contact avec le fluide, elles sont brutalement écartées de la paroi, pour s'en rapprocher ensuite sous l'effet de la force centrifuge. Les particules solides peuvent ainsi être soumises à des variations de pression et des vibrations rapides et intenses. Cette propriété est particulièrement intéressante lorsqu'il faut empêcher l'agglomération de micro particules sous l'effet des forces de cohésions et pour les particules solides collantes comme les élastomères ou les solides bitumineux. Les variations rapides de pressions permettent également d'améliorer les transferts de masse entre le fluide et les particules solides poreuses.

Selon un mode de réalisation particulier, les parois circulaires extérieures et intérieures peuvent être rotatives et l'injection de fluide au travers des ouvertures d'entrée peut se faire dans la direction opposée à leur sens de rotation afin d'obtenir une force centrifuge moins élevée le long de la paroi circulaire extérieure permettant de fluidifier les plus grosses particules tout en ayant une force centrifuge élevée le long de la paroi circulaire intérieure afin de séparer du fluide les particules les plus fines.

Afin d'éviter de grandes différences non souhaitées des flux de fluides entre différentes portions de la paroi circulaire extérieure, la chute de pression du fluide au travers de ces ouvertures d'injection de fluides est de préférence supérieure au cinquième de la pression centrifuge moyenne des particules solides sur la paroi circulaire extérieure et cette chute de pression est de préférence obtenue au moyen d'étranglements suivis d'une expansion brutale, non aérodynamique, du ou des fluides permettant de générer de la turbulence et donc une chute de pression approximativement proportionnelle au carré du flux du ou des fluides. Cette expansion brutale du ou des fluides est de préférence orientée dans une direction longitudinale et/ou radiale, et de préférence à une petite distance, du même ordre de grandeur que la largeur de l'ouverture d'injection du ou desdits fluides, avant leur rencontre avec les particules solides, afin d'améliorer la fluidisation et donc l'homogénéité du lit fluidifié.

Si l'injection du ou des fluides qui traversent rapidement le lit fluidifié rotatif est suffisamment uniforme pour minimiser les mélanges longitudinaux des particules solides et si l'épaisseur du lit fluidifié est relativement mince et la longueur de la chambre circulaire relativement grande, les particules solides alimentées d'un côté de la chambre circulaire vont se déplacer relativement uniformément vers l'autre extrémité.

Selon un mode particulier de réalisation de la présente invention, le dispositif d'alimentation du ou des dits fluides peut également comprendre une **chambre circulaire d'alimentation** du fluide entourant la chambre annulaire. Les termes « chambre circulaire » et « chambre d'alimentation » du ou des fluides sont employés dans certain mode de réalisation de la présente invention comme synonymes et se réfèrent donc à une chambre entourant la chambre annulaire et où la pression peut être maintenue au-dessus de la pression de la cheminée centrale. La paroi circulaire extérieure de la chambre annulaire peut être entourée par une seconde paroi circulaire extérieure (aussi nommé l'enveloppe extérieure) délimitant ainsi une chambre d'alimentation (ou chambre circulaire) de fluide.

Selon la présente invention, la chambre d'alimentation peut avoir une forme quelconque : sa paroi circulaire extérieure (enveloppe extérieure) peut être de forme générale cylindrique, elliptique, conique ou polygonale ou avoir une autre forme avec des courbures diverses pouvant comprendre des parties concaves. De préférence la paroi circulaire extérieure de ladite chambre d'alimentation est fixe.

La chambre d'alimentation n'est pas indispensable. Elle peut par exemple être remplacée par un distributeur de fluides comprenant un ensemble de tubes reliés chacun à un ou plusieurs injecteurs de fluide, ou tout simplement être remplacée par un dispositif d'aspiration relié à la cheminée centrale. Dans ce dernier cas, le fluide qui est injecté dans la chambre annulaire est tout simplement le fluide entourant la chambre annulaire, par exemple l'air ambiant pour les applications de séchage ou le liquide extérieur, par exemple l'eau d'un bassin dans lequel la chambre annulaire est plongée.

Si présente, la dite chambre circulaire d'alimentation peut être divisée en plusieurs tronçons annulaires et/ou longitudinaux afin de pouvoir alimenter les zones correspondantes de la dite chambre annulaire par des fluides de composition différente et/ou à des températures différentes et/ou à des pressions différentes.

La présente invention peut comprendre un dispositif **d'alimentation de particules solides** dans la dite chambre annulaire et/ou un **dispositif d'évacuation de particules solides** de la dite chambre annulaire au travers d'une ou des deux parois latérales et/ou de la paroi circulaire extérieure et/ou intérieure.

Dans la présente invention, les particules solides peuvent être alimentées au travers d'une ou plusieurs ouvertures d'entrée, entraînées par le fluide injecté au travers de cette ou ces ouvertures d'entrée.

Dans la présente invention, les particules solides peuvent être alimentées dans la chambre annulaire au travers de sa paroi circulaire intérieure par un ou plusieurs tubes passant par la chambre centrale d'évacuation du fluide.

Il peut être souhaitable, par exemple si le temps de résidence des particules solides dans la chambre annulaire doit être relativement court, d'injecter les particules solides dans la chambre annulaire avec une vitesse relativement élevée, dont la composante longitudinale favorise le mélange des particules solides et la composante tangentielle à la paroi circulaire permet d'obtenir une plus grande vitesse de rotation du lit fluidifié.

Les particules solides peuvent être alimentées d'un côté de la chambre annulaire et évacuées de l'autre côté avec un temps de résidence moyen de quelques secondes à plusieurs heures suivant les besoins de l'application, par exemple en fonction de la vitesse de polymérisation, et la localisation des tubes d'évacuation des particules solides permet d'évacuer sélectivement les plus grosses (près de la paroi circulaire) et/ou les plus fines (plus près du tube d'évacuation) particules solides. L'alimentation et/ou l'évacuation des particules solides peuvent également se faire au travers de la paroi circulaire.

Dans la présente invention, les particules solides peuvent également être évacuées au travers de la chambre d'alimentation par une ou plusieurs ouvertures dans la paroi circulaire extérieure ou les côtés de la chambre annulaire.

Selon un mode de réalisation particulier, au moins une des dites ouvertures est reliée à un tube dont l'entrée est à une distance de ladite paroi circulaire intérieure inférieure à la moitié de la distance moyenne entre ladite paroi circulaire extérieure et intérieure. Selon un mode de réalisation particulier, l'entrée d'au moins un desdits tubes est à une distance de ladite paroi circulaire extérieure inférieure à la moitié de la distance moyenne entre ladite paroi circulaire extérieure et la paroi dudit tube central. Dans la présente invention la position des ouvertures de sortie des particules solides peut permettre de contrôler l'épaisseur du lit fluidifié ou la concentration moyenne des particules solides dans la chambre annulaire ainsi que le type de particules évacuées, les plus grosses s'accumulant généralement le long de la paroi circulaire extérieure et les plus fines à proximité de la paroi circulaire intérieure.

Le présent dispositif à lit fluidifié rotatif comprend un **dispositif d'évacuation du ou des dits fluides** comprenant une ou des **ouvertures de sortie** de fluide le long de la dite paroi circulaire intérieure, orientées dans la direction de rotation du ou des fluides et des particules solides à l'intérieur de la dite chambre annulaire. Le dispositif permet d'évacuer centralement le ou les dits fluides provenant de la dite chambre annulaire au travers de la ou des dites ouvertures de sortie.

Le dispositif d'évacuation du ou des dits fluides permet de refouler à l'intérieur de la chambre annulaire les particules solides qui ont été entraînées par le fluide évacué. Ces particules solides glissent en tournant le long de la surface intérieure de la paroi circulaire intérieure, sous l'effet de la force centrifuge. A cette fin, la paroi circulaire intérieure de la chambre annulaire comprend également une ou plusieurs ouvertures de refoulement, orientées vers la chambre annulaire.

De plus, les pertes de particules solides peuvent être réduites davantage en adaptant la forme de la chambre annulaire afin de réduire le rayon de courbure et donc d'augmenter la force centrifuge dans les zones faisant face aux ouvertures de sortie afin d'améliorer la séparation entre les particules solides et le fluide évacué.

La distance d1 représente la largeur de la chambre annulaire vue en section transversale au niveau de l'ouverture de sortie, et donc la distance vue en section transversale entre la paroi extérieure de la chambre annulaire et la paroi intérieure de la chambre annulaire au niveau d'une ouverture de sortie. La distance d2 représente la largeur de la chambre annulaire vue en section transversale au niveau de l'ouverture de refoulement, et donc la distance entre la paroi extérieure de la chambre annulaire et la paroi intérieure de la chambre annulaire au niveau d'une ouverture de sortie. Ceci est par exemple illustré aux **figures 2c** et **2e****.**

Dans une section transversale d'un dispositif à lit fluidifié selon l'invention la largeur de ladite chambre annulaire, c'est-à-dire la distance entre la paroi circulaire extérieure et la paroi circulaire intérieure de la chambre annulaire peut varier localement, et par exemple de manière périodique. Dans un mode de réalisation, et vue dans une section transversale de la chambre annulaire des espaces convergents peuvent être prévues dans la chambre annulaire. Tels espaces sont par exemple obtenu quand la distance (d1) est plus grande que la distance (d2).

Dans un mode de réalisation préféré (d1) est plus grand que (d2). Lorsque (d1) est plus grand que (d2), la vitesse moyenne du fluide et des particules solides est plus élevée au travers de la section transversale (d2) et donc la pression moyenne y est plus faible, ce qui favorise le refoulement des particules solides. Toutefois le rapport entre (d1) et (d2) est de préférence inférieur à 1.5 lorsque la densité du fluide est d'un ordre de grandeur inférieure à la densité des solides, afin d'éviter que les solides, en raison de leur plus grande inertie, ne refoule le fluide au travers de (d1).

Lorsque la différence de densité entre le fluide et les solides est très grande, ce qui est le cas lorsque le fluide est un gaz et que la pression n'est pas très élevée, il est difficile pour le fluide d'accélérer les solides. Dès lors, si la convergence est trop forte, l'inertie des solides augmente leur concentration à un niveau qui peut provoquer le refoulement d'une partie du gaz et des particules solides vers la sortie en amont. Il faut donc éviter que la vitesse tangentielle du gaz ne s'écarte trop fort de la vitesse tangentielle des solides et pour cela il faut que les variations des vitesses des solides soient dans des limites raisonnables (par exemple inférieure à 25%) lorsque le rapport entre la densité des solides et du fluide est très élevé (par exemple plus de 100).

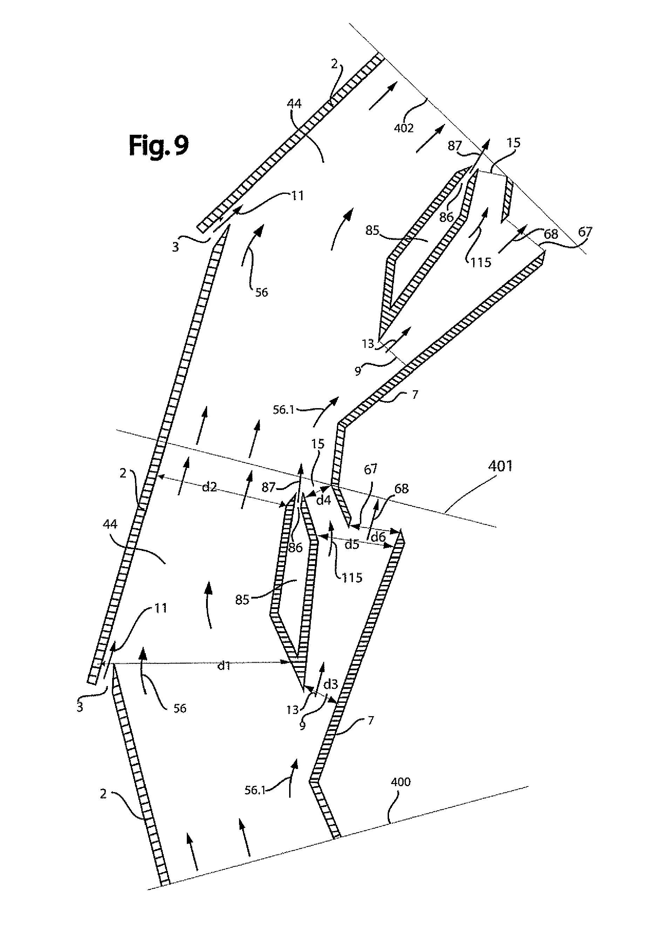

La largeur (ou section) d3 correspond à la largeur vue en section transversale de l'ouverture qui est délimitée par les extrémités de la paroi circulaire intérieure de la chambre annulaire et par laquelle le ou les fluides et les particules solides entraînées sortent de la chambre annulaire. La largeur d3 représente donc la largeur de l'ouverture de sortie vue en section transversale au niveau de l'ouverture de sortie. La largeur (ou section) d4 correspond à la largeur vue en section transversale de l'ouverture qui est délimitée par les extrémités de la paroi circulaire intérieure de la chambre annulaire et par laquelle les particules solides entraînées par le ou les fluides évacuées sont refoulées vers la chambre annulaire. La largeur d4 représente donc la largeur de l'ouverture de refoulement vue en section transversale au niveau de l'ouverture de refoulement. La largeur (ou section) d5 correspond à la largeur vue en section transversale de l'espace central (89) à hauteur de l'ouverture d'évacuation (67). La largeur (ou section) d6 correspond à la largeur vue en section transversale de l'ouverture d'évacuation (67). Ceci est par exemple illustré à la **figure 2e** ou la **figure 9****.**

Lorsque la quantité de particules solides à refouler est élevée en raison de leur forte concentration dans la chambre annulaire, leur refoulement devient difficile, ce qui peut générer des instabilités accompagnées d'un entraînement substantiel de particules solides vers le dispositif d'évacuation. Ceci peut être remédié en augmentant les dimensions des ouvertures de refoulement. Toutefois si leurs dimensions deviennent trop importantes, par exemple proche des dimensions des ouvertures de sortie (d3) une partie du fluide circulant dans la chambre annulaire peut être aspirée vers l'ouverture d'évacuation (67) au travers des ouvertures de refoulement par le dispositif d'évacuation du fluide. Ceci génère au travers de l'ouverture de refoulement une circulation du fluide à contre-courant et donc de la turbulence qui limite la quantité de particules solides pouvant être refoulée. C'est pourquoi la largeur des ouvertures de sortie et de refoulement doit être soigneusement choisie.

Les dimensions relatives des différentes ouvertures sont de préférence déterminées par les objectifs en fonction des caractéristiques du fluide et des particules solides. Il est toutefois souhaitable que les ouvertures de refoulement soient plus petites que les ouvertures de sortie pour éviter une aspiration significative de fluide qui génère de la turbulence en traversant à contre-courant les ouvertures d'évacuation. De préférence, selon l'invention la largeur (d3) des ouvertures de sortie est plus grande que la largeur (d4) des ouvertures de refoulement (15). De préférence la largeur d3 est au moins 1.1 fois plus grande que la largeur d4, et par exemple entre 1.5 à 3 fois plus grande.

Dans un mode de réalisation préféré l'espace central (89) est divergent, d5 est plus grand que d3, et d6 est de préférence plus grand que d3 pour que la vitesse d'évacuation du fluide soit plus petite que sa vitesse au travers de l'ouverture de sortie et donc que sa pression soit plus élevée afin de réduire le risque d'aspiration de fluide à contre sens au travers de l'ouverture de refoulement. De préférence la largeur des ouvertures d'évacuation est au moins 1.1 fois plus grande que la largeur des ouvertures de sortie, et par exemple entre 1.5 à 3 fois plus grande.

Selon un mode particulier de réalisation de la présente invention, le dit espace central délimité par la dite paroi circulaire intérieure peut être divisé en deux ou plusieurs tronçons par une ou plusieurs parois transversales traversant la dite paroi circulaire intérieure afin de pouvoir évacuer séparément les fluides qui ont traversé différents tronçons de la dite chambre annulaire.

Selon un mode particulier de réalisation de la présente invention, les ouvertures de sortie et de refoulement sont situées dans le ou les mêmes tronçons annulaires de la paroi circulaire intérieure et le nombre d'ouvertures de sortie est égal ou supérieur au nombre d'ouvertures de refoulement qui sont séparées par au moins une ouverture d'entrée.

Afin d'éviter d'entraîner par les ouvertures de sortie un trop grand nombre de particules solides qui pourraient engorger les ouvertures de refoulement et engendrer des instabilités, il est généralement préférable d'éviter de localiser les ouvertures de sortie dans les zones où les particules solides ont tendance à se concentrer, comme par exemple le long des parois latérales. Comme la quantité de particules solides à refouler est généralement plus importante à proximité des parois latérales, il est souhaitable d'éviter d'évacuer le fluide à proximité de ces parois.

Une autre possibilité est de localiser les ouvertures d'évacuation à une certaine distance des parois latérales, ce qui force le fluide à se déplacer longitudinalement vers le milieu du réacteur avant d'être évacué et donc d'y entraîner les particules solides qui tournent à l'intérieur de l'espace annulaire central compris entre le ou les tubes centraux d'évacuation et la paroi circulaire intérieure, ce qui les empêche de s'accumuler près des parois latérales dans cet espace annulaire central et leur permet d'être refoulées dans les zones plus éloignées des parois latérales, là où la concentration des particules solides est plus faible.

Selon un autre mode particulier de réalisation de la présente invention, les ouvertures de sortie et de refoulement sont situées dans des tronçons annulaires différents et la position des ouvertures d'évacuation et/ou la forme de la paroi circulaire intérieure favorise le glissement longitudinal des particules solides qui ont été entraînées par le fluide au travers des ouvertures de sortie et qui tournent dans l'espace central, vers les tronçons annulaires où sont localisées la ou les ouvertures de refoulement.

Par exemple, lorsque les ouvertures de sortie sont localisées à proximité des parois latérales, là où les particules solides ont tendance à s'accumuler, les ouvertures de refoulement et les ouvertures d'évacuation peuvent être localisées dans une zone éloignée des parois latérales, là où la concentration des particules solides, par exemple grâce à la répartition adéquate des injecteurs de fluide, a tendance à être moins élevée. Dans ce cas, le fluide qui tourne dans l'espace central proche des parois latérales doit, avant d'être évacué, se déplacer longitudinalement vers les ouvertures d'évacuation, ce qui permet d'entraîner les particules solides longitudinalement vers les ouvertures de refoulement. Ce déplacement longitudinal des particules solides vers les ouvertures de refoulement peut aussi être favorisé en donnant à la paroi circulaire intérieure une forme bombée dont la section transversale est la plus large dans la zone où se trouvent les ouvertures de refoulement.

Selon un autre mode particulier de réalisation de la présente invention, le dispositif d'évacuation du ou des fluides comprend un **tube central d'évacuation** qui traverse centralement l'espace central délimité par la dite paroi circulaire intérieure et qui comprend une ou des ouvertures d'évacuation par où le ou les dits fluides sont aspirés. La ou les dites ouvertures d'évacuation sont de préférence orientées dans le sens de rotation du lit fluidifié.

Selon un autre mode particulier de réalisation de la présente invention, le dit dispositif d'évacuation du ou des dits fluides comprend un ou plusieurs tubes centraux d'évacuation pénétrant centralement dans une partie du dit espace central délimité par la dite paroi circulaire intérieure, le ou les dits fluides à évacuer étant aspirés par l'extrémité du ou des dits tubes. Lorsqu'il y a plusieurs tubes, ils peuvent se faire face, chacun des tubes traversant un des côtés latéraux du dit espace et/ou être concentriques, le ou les tubes intérieurs pénétrant de préférence plus loin dans le dit espace central. Selon un mode particulier de réalisation l'extrémité d'un ou de plusieurs dits tubes est évasée.

Ces deux modes particuliers de réalisation peuvent être combinés, le tube central d'évacuation qui traverse l'espace central étant à l'intérieur des tubes centraux d'évacuation qui ne pénètrent que dans une partie de l'espace central.

Selon un mode particulier de réalisation de la présente invention, le dispositif d'évacuation du ou des dits fluides comprend une **roue à aubes** pouvant tourner à l'intérieur du dit espace central délimité par la dite paroi circulaire intérieure dans le sens de rotation du dit lit fluidifié afin d'y augmenter la vitesse de rotation du ou des fluides tournant dans cet espace et donc d'y augmenter la force centrifuge afin de mieux refouler dans la dite chambre annulaire les particules solides entraînées par le ou les dits fluides dans le dit espace central. La dite roue à aubes peut être entraînée par un arbre de transmission passant par le ou les dits tubes centraux d'évacuation et les dites aubes peuvent pénétrer dans l'espace annulaire central compris entre la dite paroi circulaire intérieure et le ou les dits tubes centraux d'évacuation.

Dans la présente invention, les dites parois circulaires et le ou les dits tubes centraux d'évacuation peuvent être cylindriques ou avoir d'autres formes. Par exemple leurs sections transversales peuvent être elliptiques et/ou polygonales ou plus complexes avec des courbures diverses. Lorsqu'elles comprennent une succession d'ouvertures dans des tronçons annulaires, elles ont de préférence une symétrie périodique autour de l'axe central du dit tronçon, le même motif se répétant et leur forme favorisant la séparation du fluide et des particules solides en amont des ouvertures de sortie et favorisant la concentration et le glissement des particules solides le long de la surface intérieure (située du côté de l'axe central) de la paroi circulaire intérieure en amont des ouvertures de refoulement. Par exemple, les dites parois circulaires et le ou les dits tubes centraux d'évacuation peuvent avoir une section transversale ayant une symétrie périodique de 30°, 36°, 40°, 45°, 60°, 72°, 90°, 120°, ou de 180°, ce qui veut dire que la section transversale complète du réacteur peut être obtenue en copiant et en pivotant respectivement de 30°, 36°, 40°, 45°, 60°, 72°, 90°, 120°, ou de 180° autour d'un axe de symétrie cylindrique périodique respectivement 12, 10, 9, 8, 6, 5, 4, 3 ou 2 fois d'affilée une certaine section du réacteur contenant un certain nombre d'ouvertures de sortie, d'ouvertures d'entrée, d'ouvertures de refoulement et éventuellement d'ouvertures d'évacuation. La symétrie périodique peut être rompue dans certaines zones afin d'éviter des phénomènes de résonance qui peuvent produire des instabilités.

Cependant, la symétrie n'est pas obligatoire. Par exemple, la chambre annulaire peut ne pas avoir de symétrie cylindrique périodique. Par exemple, lorsque ses sections transversales sont verticales, il peut être souhaitable de donner à ses sections transversales une plus grande largeur et un plus petit rayon de courbure dans sa partie supérieure, ce qui donne à ses sections transversales la forme de la section d'un oeuf. Ceci permet de compenser l'effet de la pesanteur qui ralenti les particules solides dans la partie supérieure de la chambre annulaire, afin d'obtenir une force centrifuge et une concentration de particules solides plus uniformes. Dans ce cas l'axe de symétrie cylindrique périodique peut être remplacé par un axe central passant par exemple le long du centre de gravité de ces sections transversales.

Les particules solides peuvent être, en partie ou en totalité, recyclées dans la chambre annulaire, directement ou après traitement adéquat, par exemple une régénération et plusieurs chambres annulaires peuvent être mises en série, les particules évacuées d'une chambre annulaire étant alimentées dans la chambre suivante. Le dispositif à lit fluidifié rotatif selon la présente invention peut donc également comprendre un **dispositif de recyclage desdites particules solides**. Selon un mode de réalisation particulier, le dispositif de recyclage desdites particules solides comprend au moins deux chambres annulaires successives, lesdites particules solides évacuées d'une desdites chambres annulaire successives étant alimentées dans la suivante.

De même les fluides peuvent être, en partie ou en totalité, recyclés après traitements adéquats, par exemple séchés, purifiés, refroidis ou réchauffés et si le dispositif d'alimentation et d'évacuation de ces fluides permet de les alimenter séparément dans des sections (tronçons) successives de la chambre annulaire et de les évacuer et de les traiter séparément, ces fluides peuvent être recyclés dans la même section ou dans une autre section en fonction des besoins de l'application. C'est pourquoi le dispositif selon la présente invention, peut aussi comprendre un **dispositif de recyclage** d'au moins une partie **du ou desdits fluides** évacués par ledit dispositif d'évacuation du ou desdits fluides vers ledit dispositif d'alimentation du ou desdits fluides. Selon un mode de réalisation particulier, ledit dispositif d'évacuation desdits fluides permet d'évacuer séparément lesdits fluides provenant de sections annulaires successives de ladite chambre annulaire et ledit dispositif de recyclage desdits fluides permet de traiter et d'alimenter séparément dans les mêmes ou dans d'autres dites sections annulaires successives lesdits fluides évacués séparément.

Dans un mode de réalisation particulier, les ouvertures d'évacuation (67) peuvent être fermées, par exemple par des plaques (7.2), comme illustré par la **figure 2d**, dans les zones où la concentration des particules solides est élevée, comme par exemple le long des parois latérales, afin d'éviter d'augmenter localement le risque d'entraîner des particules solides au travers de ces ouvertures d'évacuation.

Dans un autre mode de réalisation particulier, le dispositif selon l'invention peut comprendre des plaques libres ou déflecteurs intérieurs (7.3) à une certaine distance de ladite paroi circulaire intérieure (7) en face de l'espace intérieur entre une ouverture de sortie et l'ouverture de refoulement située en aval de ladite ouverture de sortie.

Dans tel mode de réalisation lesdites plaques libres ou déflecteurs intérieurs (7.3) modifient les ouvertures d'évacuation, par exemple changent leur orientation et réduisent leur passage. Elles peuvent délimiter des ouvertures de refoulement (15,1) des particules solides entraînées au travers des ouvertures d'évacuation (67) dans l'espace central (90) et, en guidant le fluide dans l'espace (89) compris entre la plaque (7,1) et la plaque (7,3), favoriser le refoulement de ces particules solides au travers de l'ouverture (15) située en aval de l'ouverture (15,1).

La **figure 2e** montre un exemple de tel mode de réalisation.

La paroi circulaire intérieure (7), et en particulier sa surface intérieure, peut également être pourvue d'une combinaison de plaques fixes (7.2) et plaques libres (7.3).

Dans une section transversale du dispositif selon l'invention des espaces divergents (89) peuvent être prévus. La **figure 2e** montre un exemple de tel mode de réalisation. Tels espaces (89) sont par exemple obtenus quand le dispositif comprend des plaques libres ou déflecteurs intérieurs (7.3) prévues au niveau des ouvertures de sortie et/ou de refoulement. Les plaques libres peuvent délimiter avec la paroi circulaire intérieure (7, 7.1) des espaces divergents (89). De préférence, la largeur (d3) de l'entrée de tel espace (89) est plus petite que la largeur (d5) de la sortie de tel espace (89). La largeur (d3) correspond à la largeur vue en section transversale de l'ouverture de sortie (9), qui est délimitée par les extrémités (7, 7.1) de la paroi circulaire intérieure de la chambre annulaire. La largeur (d6) vue dans une même section transversale correspond à la largeur de la sortie d'évacuation (67).

Dans le cas de plaques libres ou déflecteurs intérieurs (7.3) le dispositif selon l'invention comprend une ou plusieurs **ouvertures de refoulement additionnelles** (15.1) prévues entre la surface intérieure de ladite paroi circulaire intérieure (7) et une plaque libre ou déflecteur intérieur (7.3), et de préférence prévues au niveau d'une ouverture de sortie et/ou une ouverture de refoulement. Les extrémités des plaques successives (7), (7.3) délimitent donc des ouvertures de refoulement (15.1) additionnelles. La **figure 2e** montre un exemple de tel mode de réalisation.

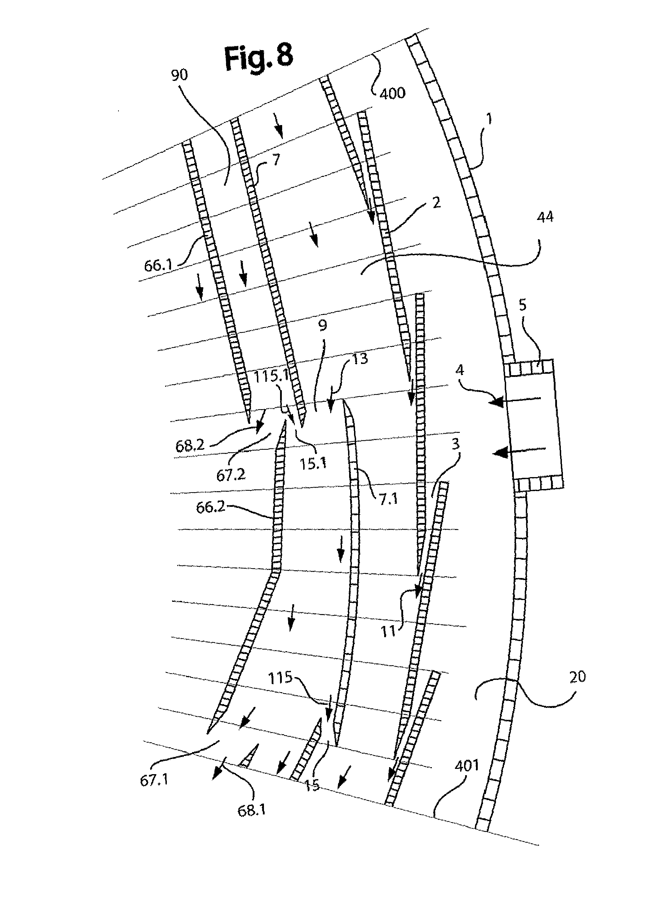

En plus, une ou plusieurs ouvertures de refoulement additionnelles (15.1) peuvent également être prévues entre la surface intérieure de ladite paroi circulaire intérieure (7) et la paroi extérieure d'un tube d'évacuation. La **figure 8** montre un exemple de tel mode de réalisation.

La **figure 1** montre un exemple de la coupe transversale d'un réacteur à lit fluidifié rotatif où les ouvertures de sortie du fluide sont situées dans le même plan transversal que les ouvertures de refoulement des particules solides. La figure 1 montre une section transversale approximativement elliptique ayant une symétrie périodique de 180°, ce qui veut dire que la deuxième moitié du réacteur est identique à la première moitié et a été pivotée de 180° autour d'un axe central (non représenté). La symétrie n'est pas obligatoire. Le lit fluidifié est contenu dans une chambre annulaire (44), délimitée par une paroi circulaire extérieure (2) comprenant des ouvertures d'entrée (3) permettant d'injecter tangentiellement le fluide (11) afin de faire tourner le fluide et les particules solides contenues dans la dite chambre annulaire et une paroi circulaire intérieure (7) comprenant des ouvertures de sortie (9), orientées dans le sens de rotation (56) du fluide et des particules solides, afin d'évacuer le fluide (13) et des ouvertures de refoulement (15), orientées vers la chambre annulaire, permettant de refouler à l'intérieur de la chambre annulaire les particules solides (115) qui ont été entraînées par le fluide (13) et qui longent la surface intérieure (du côté du centre) de la paroi circulaire intérieure (7) en raison de la force centrifuge.

Le réacteur comprend un dispositif d'alimentation de fluide symbolisé par une chambre d'alimentation (20) délimitée par une paroi ou enveloppe extérieure (1) entourant la chambre annulaire (44) et alimentée en fluide (4) par les tubes (5).

Le réacteur comprend un dispositif d'évacuation de fluide symbolisé par un tube central dont la paroi centrale (66) comprend des ouvertures d'évacuation (67) du fluide (68), permettant d'évacuer le fluide (109) qui tourne dans l'espace annulaire central (90) compris entre la paroi circulaire intérieure (7) et la paroi centrale (66) du tube d'évacuation.

Les ouvertures de sortie (9) sont de préférence orientées dans le sens de rotation du fluide et des particules solides (56) tournant à l'intérieur de la dite chambre annulaire (44) afin de permettre la sortie du fluide accompagné de particules solides, généralement les plus fines, qu'il entraîne par ces ouvertures de sortie, sans les ralentir. Les ouvertures d'évacuation (67) sont également de préférence orientées dans le sens de rotation du fluide (109) afin d'en faciliter la sortie sans en ralentir la rotation. Les ouvertures de refoulement (15) sont orientées dans le même sens que les ouvertures d'entrée (3) avec une composante radiale dirigée vers l'extérieur (vers la chambre annulaire) afin de faciliter le retour des particules solides dans la chambre annulaire (44) grâce à leur inertie, tout en empêchant le fluide et les particules solides (56) qui tournent à l'intérieur de la dite chambre annulaire (44) de sortir par ces ouvertures (15), à cause de leur inertie, mais au contraire d'exercer un effet d'aspiration, qui peut être accentué si la section de la chambre annulaire le long des ouvertures de refoulement est plus étroite que le long des ouvertures de sortie.

Dans cet exemple, le nombre et les caractéristiques des ouvertures d'entrée (3) doivent être suffisantes pour permettre la formation d'un lit fluidifié rotatif. Le nombre d'ouvertures de sortie (9) est de préférence égal au nombre d'ouvertures de refoulement (15). Il peut être égal à un.

Le nombre d'ouvertures d'évacuation (67) est de préférence égal ou supérieur au nombre d'ouvertures de refoulement (15).

La forme des parois circulaires (2), (7) et (66) peut être approximativement cylindrique, mais elle peut être différente. Par exemple, ces parois peuvent être de forme générale cylindrique, conique, bombée ou évasée et la forme de leurs sections transversales peut être elliptique ou polygonale ou avoir d'autres formes avec des courbures diverses pouvant comprendre des parties concaves. Elles peuvent par exemple avoir la forme de la section transversale d'un oeuf ou d'une banane ou être ondulée. Ces parois peuvent avoir une symétrie périodique autour d'un axe central perpendiculaire au plan de la figure, le même motif se répétant. Cette symétrie périodique peut être rompue par endroits pour éviter des phénomènes de résonance qui peuvent générer des instabilités. Leur section peut varier dans la direction axiale.

D'une manière plus générale, des portions de ces parois peuvent être planes et même avoir localement des courbures concaves, la forme des sections transversales de ces parois devant, de préférence, favoriser la séparation du fluide et des particules solides en amont des ouvertures de sortie et des ouvertures d'évacuation, tout en permettant un glissement aisé des particules solides le long de la surface intérieure (du côté de l'axe central) de la paroi circulaire intérieure en amont des ouvertures de refoulement.

Dans l'exemple illustré par la **figure 1**, la forme des sections transversales des parois circulaires (2), (7) et (66) est elliptique, avec les petits rayons de courbure situés des côtés des ouvertures de sortie du fluide afin de faciliter la séparation du fluide et des particules solides et les grands rayons de courbure du côté des ouvertures de refoulement, afin de faciliter le glissement des particules solides avant leur refoulement. La paroi centrale (66) a été pliée en aval des ouvertures de sortie (9) afin de mieux séparer le fluide des particules solides et de repousser par la force centrifuge, vers les ouvertures de refoulement (15), les particules solides qui tournent dans l'espace annulaire central (90).

Les **figures 2a****-f** montrent des sections transversales de 1/12^{ème} de différents dispositifs d'évacuation de fluide qui peuvent être utilisés dans la présente invention. Dans ces exemples, une chambre annulaire (44) à symétrie cylindrique périodique dont la paroi circulaire extérieure (2) est constituée d'une succession de 12 plaques délimitant 12 ouvertures (3) par où un fluide (11) peut être injecté tangentiellement à la plaque suivante. La section transversale complète du réacteur peut être obtenue en copiant et en pivotant de 30° autour de l'axe de symétrie cylindrique périodique (non représenté sur la figure) 11 fois d'affilée les différents modèles reproduits sur les figures 2a-f. Les lignes (400) et (401) représentent les sections transversales des plans longitudinaux passant par l'axe de symétrie (non visible sur les figures) et délimitant les extrémités des secteurs de 30° formant 1/12^{ème} du réacteur.

La **figure 2a** comprend une paroi circulaire intérieure (7) constituée d'une succession de 12 plaques pliées délimitant les ouvertures de sortie (9) par où le fluide peut être évacué au travers de l'espace central (90). Selon ce mode de réalisation les particules solides contenues dans la chambre annulaire (44) sont entraînées dans un mouvement de rotation (56) dont la force centrifuge les repousse le long de la paroi circulaire extérieure (2). Les ouvertures de sortie (9) sont orientées de manière à permettre au fluide (13) qui a du traverser le lit fluidifié rotatif de particules solides d'être évacué approximativement dans la même direction que le sens de rotation (56) du lit fluidifié.

La qualité de la séparation du fluide et des particules solides est déterminée par le rayon de courbure de la trajectoire (56.1) que le fluide doit suivre le long de la plaque pliée ou courbée (7). Elle est d'autant meilleure que le rayon de courbure est petit.

Cependant le rayon de courbure des lignes de flux (56) dépend du rayon du réacteur qui peut être relativement grand dans les réacteurs industriels. La force centrifuge peut dès lors être insuffisante pour assurer une bonne séparation du fluide et des particules solides lorsqu'elles sont très petites et/ou lorsque le diamètre du réacteur et/ou le flux de fluide est très grand. Une quantité importante de particules solides peut dès lors être entraînées par le fluide (13), surtout dans les zones de forte concentration de particules solides, par exemple le long des parois latérales où la vitesse de rotation du lit fluidifié est ralentie par la friction.

Dans un mode de réalisation, une forte réduction des pertes de particules solides peut également être observée lorsque les ouvertures de sortie du fluide sont orientées dans le sens opposé au sens de rotation du lit fluidifié. Il est en effet plus facile pour le fluide d'inverser la direction de son écoulement que pour les particules solides qui ont une inertie plus grande. Dans ce cas le rayon de courbure imposé au fluide est plus petit que l'épaisseur (la distance entre les deux parois circulaires) de la chambre annulaire fixe, ce qui permet d'y obtenir des forces centrifuges très élevées. Ceci est illustré par la **figure 2b** montrant un dispositif d'évacuation de fluide à contre-courant. Ce mode de réalisation avec des ouvertures d'évacuation orientées dans le sens opposé au sens de rotation du lit fluidifié peut également être introduit dans le dispositif d'évacuation de fluide selon l'invention et comprendre des ouvertures de refoulement, comme illustré par la **figure 3**.

La **figure 2b** montre un dispositif d'évacuation du fluide (13) par des ouvertures (9) dont l'orientation est opposée à l'orientation des ouvertures d'entrée (3). Le fluide (13) doit donc tourner d'environ 180° avant de pouvoir sortir par l'ouverture de sortie (9). Ceci lui impose donc un rayon de courbure d'un ordre de grandeur inférieur au rayon de courbure moyen des parois circulaires et cela permet d'obtenir des forces centrifuges plus élevées et donc d'assurer une meilleure séparation du fluide et des particules solides et donc d'augmenter la concentration des particules solides tournant à l'intérieur de la chambre annulaire. Cette meilleure séparation est obtenue au prix d'une différence de pression plus élevée nécessaire à l'inversion de l'écoulement du fluide.

**La** **figure 2c** montre un exemple d'un mode de réalisation du dispositif d'évacuation avec refoulement des particules solides (115) dans la chambre annulaire. La paroi circulaire intérieure est constituée par une succession d'un ensemble de deux plaques (7) et (7.1) délimitant des ouvertures de sortie (9), semblables à celles de la **figure 2a** et des ouvertures de refoulement (15) dont l'orientation a une composante tangentielle dirigée dans le même sens que le sens de rotation (56) du lit fluidifié et une composante radiale dirigée vers l'extérieur de manière à réintroduire les particules solides dans la chambre annulaire.

Le fluide (56) est aspiré par le dispositif d'évacuation centrale. Il doit suivre une trajectoire courbée (56.1) avant de passer au travers des ouvertures de sortie (9). Le fluide (13) est donc séparé de la plupart des particules solides qu'il entraîne. Ensuite il doit passer au travers des ouvertures d'évacuation (67) délimitées par les extrémités des plaques consécutives (7). Il doit suivre une trajectoire courbée (68). Il est donc séparé du reste des particules solides (115) qui, sous l'effet de la force d'inertie, poursuivent leur trajectoire au travers de l'ouverture de refoulement (15) vers la chambre annulaire (44).

La dimension de ces ouvertures de sortie (9) détermine la vitesse du fluide et donc aussi la vitesse des particules solides qu'il entraîne et qui glissent le long de la surface intérieure (du côté du centre) des plaques (7.1). Plus ces ouvertures sont petites, plus la vitesse est grande. Cependant l'accélération des particules solides nécessite une force d'aspiration du fluide (68) qui doit être d'autant plus grande que la densité relative des particules solides, leur concentration et leur augmentation de vitesse est importante. Si la concentration des particules solides entraînées par le fluide (13) est trop importante, la force d'aspiration exercée par le dispositif d'évacuation sur le fluide (68) peut aussi aspirer du fluide à contre-courant au travers de l'ouverture de refoulement (15) et donc générer des tourbillons qui freinent le refoulement des particules solides et peuvent générer des instabilités. Les dimensions des ouvertures de sortie et de refoulement doivent donc être conçues en fonction des caractéristiques souhaitées du lit fluidifié, notamment la concentration des particules solides, leur dimensions et leur densité relative, et du débit du ou des fluides.

Pour pénétrer dans l'espace central (90) au travers des ouvertures d'évacuation (67), le fluide (68) doit à nouveau suivre une trajectoire courbée et est ainsi séparé du reste des particules solides par la force centrifuge qui est d'autant plus grande que la vitesse de sortie est élevée et que le rayon de courbure est petit.

La déviation du fluide générée par la position des extrémités des plaques (7) successives peut impliquer une rotation du fluide d'environ 180° et donc semblable à la **figure 2b** ou à la **figure 3** où le fluide est évacué à contre courant. Toutefois une forte courbure nécessite une plus grande force d'aspiration et augmente donc le risque d'aspiration de fluide à contre-courant au travers des ouvertures de refoulement.

Dans cet exemple, les plaques (7.1) sont semblables à des déflecteurs extérieurs à la paroi circulaire intérieure (7), qui sont disposés en face des ouvertures d'évacuation (67) et qui délimitent avec la paroi circulaire intérieure (7) les ouvertures de sortie (9) et de refoulement (15), afin d'empêcher les particules solides de sortir par les ouvertures d'évacuation (67) et de les guider vers les ouvertures de refoulement dans la chambre annulaire. Elles sont planes et de préférence en aval et/ou en face des ouvertures d'entrée (3), qui sont orientées dans la même direction que les ouvertures de sortie (9). La séparation des particules solides et du fluide (13) est assurée par la rotation que le fluide (56.1) doit effectuer aux extrémités avales des plaques (7). Le refoulement des particules solides (115) est assuré par l'inclinaison des extrémités amont des plaques (7) qui les guident vers la chambre annulaire, l'ouverture (15) étant orientée dans une direction ayant une composante radiale dirigée vers la paroi circulaire extérieure.

Le refoulement des particules solides dans la chambre annulaire permet de réduire substantiellement les pertes de particules solides sans augmenter substantiellement la chute de pression nécessaire à l'évacuation du fluide. Il permet d'obtenir des concentrations de particules solides substantiellement plus élevées dans la chambre annulaire.

La concentration des particules solides qui glissent le long de la surface intérieure de la plaque (7.1) et donc leur séparation du fluide (68) peut être améliorée en courbant les plaques (7.1). Toutefois une courbure freine les particules solides, ce qui limite la quantité de particules solides pouvant être refoulées.

Le refoulement des particules solides peut être facilité par la différence de pression entre les extrémités des plaques (7.1) dues aux différences de largeur, (d1) et (d2), de la chambre annulaire. Toutefois une convergence trop importante des plaques (7.1) et (2) peut générer un engorgement des particules solides qui peuvent repousser le fluide à contre courant vers l'ouverture de sortie (9) et ainsi augmenter la quantité de particules solides entraînées au travers des ouvertures de sortie (13).

Dans un mode de réalisation particulier, le dispositif peut être pourvu de plaques qui bouchent localement les ouvertures d'évacuation, par exemple dans les zones où la concentration des particules solides est la plus élevée, comme par exemple le long des parois latérales, afin d'éviter l'évacuation des particules solides dans ces zones. La **figure 2d** montre un exemple de section transversale dans une zone où l'évacuation du fluide (13) est empêchée au moyen de plaques (7.2) qui bouchent les ouvertures d'évacuation. Si la quantité de particules solides qui pénètrent au travers des ouvertures (9) à l'intérieur de ces zones est trop importante pour être évacuée dans la même zone par l'ouverture de refoulement (15), elles peuvent se déplacer longitudinalement (perpendiculairement au plan de la figure), vers les zones où la concentration des particules solides est plus faible. Cet exemple de dispositif permet donc d'éloigner les particules solides des zones de forte concentration, par exemple le long des parois latérales, et donc de mieux uniformiser le lit fluidifié rotatif. Ce mode de réalisation du dispositif permet d'éloigner les particules solides des zones de forte concentration, par exemple le long des parois latérales, et de mieux uniformiser le lit fluidifié rotatif. Tel mode de réalisation permet donc de prélever les particules solides dans les zones de la chambre annulaire où la concentration est élevée et de les répandre vers les zones de faible concentration et donc d'assurer une circulation longitudinale des particules solides tout en réduisant les différence de concentration et donc en s'opposant au phénomène de "chenalisation annulaire".

La **figure 2e** montre un autre exemple d'un mode de réalisation du dispositif de refoulement. Une succession de plaques (7.3) délimitent avec les extrémités des plaques successives (7) une deuxième succession d'ouvertures de refoulement (15.1) et les ouvertures d'évacuation (67). Ces plaques (7.3) délimitent avec les plaques (7.1) des espaces divergents (89), dont la largeur de l'entrée (d3) est plus petite que la largeur de la sortie (d5). A l'intérieur de ces espaces (89), le fluide (13) est ralenti et donc sa pression augmente. Ceci permet d'obtenir des vitesses élevées du fluide (13) et donc des particules solides qu'il entraîne, sans nécessiter une pression trop basse le long des ouvertures d'évacuation (67). Ceci diminue donc le risque d'aspirer du fluide au travers des ouvertures de refoulement (15) et permet donc d'augmenter la quantité et la stabilité du refoulement de particules solides, de la même manière que l'espace convergent entre les plaques (7.1) et les plaques (2) permet de réduire la pression le long de la section (d2), plus étroite, et donc d'améliorer le refoulement.

En outre, la section des ouvertures d'évacuation (d6) étant plus grande que la section (d3), la pression le long de l'ouverture de sortie (9) peut être plus basse que la pression le long de l'ouverture d'évacuation (67), ce qui favorise le refoulement des particules solides (115.1) qui ont été entraînées par le fluide (68) au travers des ouvertures d'évacuation (67) et qui, sous l'effet de la force centrifuge, glissent le long de la surface intérieure des plaques (7) (c'est-à-dire le long de la surface intérieure de la paroi circulaire intérieure). Elles peuvent ensuite être refoulées dans la chambre annulaire par l'ouverture de refoulement suivante (15).

Les plaques (7.1) et (7.3) peuvent être assimilées à des déflecteurs disposés respectivement à l'extérieur et à l'intérieur de la paroi circulaire intérieure (7) en face des ouvertures réparties le long de celle-ci et délimitant respectivement avec celle-ci d'une part des ouvertures de sortie (13) et de refoulement (15) et des ouvertures d'évacuation (67) et de refoulement (15.1).

La **figure 2f** montre un autre mode de réalisation du dispositif selon l'invention comprenant une roue à aubes (150) pouvant tourner autour de l'axe central de symétrie périodique (non représenté sur la figure) dans la direction (153) qui est celle du lit fluidifié (56). Si la vitesse de rotation (153) est plus rapide que la vitesse de rotation (56) du lit fluidifié, le fluide évacué (68) est accéléré par les aubes, ce qui augmente la force centrifuge et améliore le refoulement des particules solides (115.1) qui ont été entraînées par le fluide et glissent dans l'espace central (90) le long de la paroi circulaire intérieure (du coté du centre) ou le long des plaques (7) vers les plaques (7.1) et les ouvertures de refoulement (15).

L'ensemble des **figures** de **2a** à **2f** décrit différents modes de réalisation de dispositifs d'évacuation de fluides (11) qui ont traversé un lit de particules solides fluidifiées entraînées par les dits fluides (11) dans un mouvement de rotation à l'intérieur d'une chambre annulaire. Ces exemples ne sont pas limitatifs. Par exemple les différentes plaques (2), (7), (7.1) et (7.2) peuvent avoir des courbures convexes et/ou concaves. Le nombre d'ouvertures d'entrée (3) peut être plus ou moins élevé que le nombre d'ouvertures de sortie (9) et/ou de refoulement (15). Ces figures peuvent être complétées par une enveloppe extérieure (1) délimitant une chambre d'alimentation (20) et un ou plusieurs tubes intérieurs (66) tels que décrits dans d'autres figures et faisant partie du dispositif central d'évacuation du ou des fluides.

Il est souhaitable tout d'abord d'assurer une première séparation entre le fluide (56.1) et les particules solides en amont des ouvertures de sortie (9), afin de limiter la quantité de particules solides qui doivent être refoulées. La surface de la paroi (7) en amont de ces ouvertures (9) a de préférence une courbure ou un angle de déviation dirigée vers le centre du dispositif. Elle est donc de préférence orientée dans une direction ayant une composante radiale dirigée vers le centre. De même l'orientation des ouvertures (9), c'est-à-dire la direction d'écoulement du fluide (13) à travers l'ouverture de sortie (9) a de préférence une composante radiale dirigée vers le centre du dispositif à lit fluidifié.

Ensuite les particules solides qui ont été entraînées par le fluide (13) doivent être guidées vers l'ouverture d'évacuation (15) qui suit l'ouverture de sortie (9). Pour cela il est souhaitable que les particules solides se concentrent de préférence le long de la surface intérieure de la paroi circulaire intérieure (et donc des plaques (7.1)) et glissent vers l'ouverture de refoulement (15). Il est donc souhaitable que la surface intérieure de la paroi (7.1) ait un angle d'incidence avec la direction d'écoulement des particules solides qui traversent les ouvertures de sortie (9). Cette direction d'écoulement des particules solides, principalement tangentielle à l'intérieur de la chambre annulaire, est déviée par la composante radiale du fluide (56.1) dirigée vers le centre qui longe la paroi circulaire intérieure (7). Il est donc souhaitable que la surface intérieure de la paroi circulaire intérieure (7.1) forme un angle inférieur à 90° avec le rayon de la chambre annulaire passant par l'ouverture de sortie (13).

Il est également souhaitable que le glissement des particules solides le long de la surface intérieure de la plaque (7.1) ait une composante radiale dirigée vers l'extérieur à l'extrémité aval de la plaque (7.1). Il est donc souhaitable qu'elle forme également un angle inférieur à 90° avec le rayon de la chambre annulaire passant par la sortie de refoulement. Ces 2 préférences impliquent que la plaque (7.1) forme de préférence un angle inférieur à x° avec la tangente qui passe par son extrémité amont et de préférence supérieure à x°/2, x° étant l'angle formé par le secteur passant par les 2 extrémités de la plaque (7.1) et le centre de symétrie périodique.

Ensuite les particules solides qui glissent le long de la surface intérieure de la paroi circulaire intérieure (7.1) traverse les ouvertures de refoulement (15) et sont refoulées vers la chambre annulaire. A cette fin, l'orientation des ouvertures de refoulement (15), c'est-à-dire la direction d'écoulement des particules solides au travers de cette ouverture (15), a une composante radiale dirigée vers l'extérieur du dispositif.

Le sens d'écoulement au travers des ouvertures de refoulement (15) est dirigé vers la chambre annulaire. La pression dynamique des particules solides est de préférence supérieure à la différence de pression du fluide entre la chambre annulaire et les ouvertures d'évacuation (67). Il est donc souhaitable de minimiser la pression de la chambre annulaire le long des ouvertures de refoulement, en contrôlant la largeur de la chambre annulaire (vue en section transversale) au niveau des ouvertures de sortie et de refoulement, et donc en prévoyant de préférence une distance (d2) plus petite que (d1), et donc de définir un espace convergent entre les plaques (2) et (7.1). Le degré de convergence souhaitable est toutefois limité par la densité relative des particules solides et leur concentration moyenne souhaitée, afin d'éviter que leur inertie engendre localement une trop forte concentration de particules solides pouvant repousser une partie du fluide injecté (11) vers l'ouverture (9) et donc augmenter substantiellement la quantité de particules solides entraînées au travers de l'ouverture (9).

Il est également souhaitable de maximiser la pression le long des ouvertures d'évacuation (67) en contrôlant le degré de divergence de l'espace divergent (89), et donc en prévoyant de préférence une distance (d6) plus grande que (d3). L'orientation de la plaque (7.3) a donc de préférence une composante radiale dirigée vers le centre.

Il est également souhaitable de maximiser la pression dynamique des solides en leur donnant une vitesse élevée, qui est obtenue au prix d'une diminution de la pression du fluide. Pour éviter de devoir trop réduire la pression le long des ouvertures de sortie (9) qui se répercute automatiquement sur la pression des ouvertures d'évacuation (67), il est souhaitable de limiter la concentration moyenne des particules solides à l'intérieur du lit fluidifié à un niveau inférieur au niveau pour lequel la masse des particules solides qui passent par les ouvertures de sortie (9) est trop élevée et de préférence pas plus d'un ordre de grandeur au-dessus de la masse de fluide qui passe par ces ouvertures. Ceci nécessite une bonne séparation primaire entre le fluide (56.1) et les particules solides et donc un rayon de courbure relativement petit.. A cette fin, il est souhaitable que la surface de la paroi circulaire intérieure en amont de l'ouverture de sortie (13) forme un angle avec la direction tangentielle de rotation du lit fluidifié et de préférence un angle égal ou supérieur à l'angle formé par la surface intérieure de la plaque (7.1) avec la même tangente.

Dans un autre exemple, illustré par la **figure 3**, la forme des sections transversales des parois circulaires (7) et (66) est polygonale. La chambre annulaire (44) délimitée par sa paroi circulaire extérieure (2) et sa paroi circulaire intérieure (7) est alimentée en fluide (11) par exemple provenant d'une chambre d'alimentation (non représentée) au travers des injecteurs ou ouvertures (3) d'injection de fluide dans la direction ayant une composante tangentielle dans le sens des flèches (56). La paroi circulaire intérieure (7) de la chambre annulaire (44) comprend des ouvertures de sortie (9), orientées dans le sens de rotation (56) du fluide et des particules solides avec une composante radiale dirigée vers l'intérieur, afin d'évacuer le fluide (13). La paroi circulaire intérieure (7) de la chambre annulaire (44) comprend des ouvertures de refoulement (15), orientées dans le même sens de rotation avec une composante radiale dirigée vers l'extérieur, permettant de refouler à l'intérieur de la chambre annulaire les particules solides (115) qui ont été entraînées par le fluide (13) et qui longent la surface intérieure (du côté du centre) de la paroi circulaire intérieure (7) en raison de la force centrifuge ou d'inertie. Le réacteur comprend un dispositif d'évacuation de fluide symbolisé par un tube central dont la paroi centrale (66) comprend des ouvertures d'évacuation (67) du fluide (68), permettant d'évacuer le fluide qui tourne dans l'espace annulaire central (90) compris entre la paroi circulaire intérieure (7) et la paroi centrale (66) du tube d'évacuation.

Dans cet exemple l'orientation des ouvertures d'évacuation (67) a une composante tangentielle dirigée dans le sens contraire du sens de rotation (56) afin d'améliorer la séparation entre le fluide (68) et les particules solides (115).

Cet exemple illustre également un dispositif d'injection de fluide avec étranglement suivi d'une expansion non aérodynamique. Tel dispositif d'injection avec étranglement peut également être introduit dans un dispositif à lit fluidifié selon l'invention et comprenant un dispositif d'évacuation avec refoulement. Dans cet exemple, la paroi circulaire extérieure est formée de plaques courbes (70) séparées par des fentes (3) et s'appuyant sur une paroi cylindrique (60) comprenant de nombreuses ouvertures (61) percées en face des fentes (3). Le fluide (62) pénètre radialement dans les ouvertures (61) et il est dévié dans les fentes (3) dans la direction (11) tout en subissant une expansion dans la direction longitudinale, ce qui le ralentit et génère de la turbulence. Lesdits étranglements s'élargissent donc de manière non aérodynamique et génèrent un écoulement turbulent du ou des fluides. Ce dispositif avec étranglement non aérodynamique permet donc, en générant de la turbulence, de mieux répartir l'injection de fluide et de mieux fluidifier le lit fluidifié.

Lorsque la quantité de particules solides qui sont entraînées par le fluide dans l'espace annulaire central devient importante, leur concentration peut devenir localement suffisamment élevée pour générer des instabilités. Ce risque est plus élevé lorsqu'il se forment des "chenaux" où la concentration des particules solides est très faible et par où le fluide est évacué préférentiellement en chassant les particules solides vers des zones où leur concentration est très élevée et d'où elles peuvent être plus facilement entraînées par le fluide à l'intérieur de l'espace annulaire centrale. Ce risque est particulièrement élevé le long des parois latérales de la chambre annulaire. C'est pourquoi il est généralement préférable d'éviter d'avoir des ouvertures de sortie ou d'évacuation à proximité de ces parois latérales.

Un mode particulier de réalisation de la présente invention permet d'éviter ce problème. Il comprend un ou plusieurs tubes centraux d'évacuation dont la ou les ouvertures d'évacuation sont éloignées des parois latérales, ce qui oblige les particules solides, qui tournent dans l'espace annulaire central à proximité des parois latérales, de s'éloigner des dites parois latérales vers les tronçons annulaires qui comprennent moins de particules solides et où elles peuvent être plus aisément refoulées vers la chambre annulaire.

Dans ce mode particulier de réalisation, la ou les ouvertures de sortie peuvent être disposées dans des tronçons annulaires où les particules solides ont tendance à s'accumuler, par exemple le long des parois latérales, et donc là où le risque d'entraîner des particules solides est élevé. La ou les ouvertures de refoulement et d'évacuation peuvent être disposées dans les tronçons annulaires où la concentration des particules solides a tendance à être moins élevée, par exemple au milieu de la chambre annulaire. Les particules solides qui ont été entraînées dans l'espace annulaire central à proximité des parois latérales vont nécessairement se déplacer vers le milieu de cet espace en décrivant des trajectoires hélicoïdales et s'y concentrer avant d'être refoulées par la force centrifuge et leur inertie vers la chambre annulaire dans le tronçon annulaire où il y a peu de particules solides et d'où elles seront repoussées par le fluide vers les parois latérales. Ce dispositif permet donc de prélever les particules solides dans les zones de la chambre annulaire où la concentration est élevée et de les refouler vers les zones de faible concentration et donc d'assurer une circulation longitudinale des particules solides tout en réduisant les différences de concentration et donc en s'opposant au phénomène de "chenalisation annulaire".

Les **figures** de **4** à **6** décrivent un autre mode de réalisation dans lequel les ouvertures de sortie et les ouvertures de refoulement sont situées dans des tronçons annulaires séparés de la chambre annulaire.

La **figure 4** décrit un exemple de ce mode particulier de réalisation. Elle montre la coupe longitudinale ou axiale d'un exemple de réacteur à lit fluidifié rotatif, où les ouvertures de refoulement des particules solides sont groupées dans un tronçon annulaire central et où les ouvertures de sortie du fluide sont situées de part et d'autre de ce tronçon annulaire. L'axe 84 représente l'axe central, généralement un axe de symétrie cylindrique périodique. Cependant une telle symétrie n'est pas obligatoire. Dans ce cas l'axe (84) peut être appelé un axe central approximativement situé le long du centre de gravité des différentes sections. Il peut aussi être ignoré. Toutefois la chambre annulaire étant circulaire elle entoure un volume central.

Le lit fluidifié est contenu dans la chambre annulaire (44.1, 44.2), délimitée par la paroi circulaire extérieure (2) comprenant des ouvertures d'entrée (3) permettant d'injecter tangentiellement le fluide (11.1, 11.2) afin de faire tourner le fluide et les particules solides (56) contenues dans la dite chambre annulaire. La paroi circulaire intérieure (7) comprend des ouvertures de sortie (9.1, 9.2), orientées dans le sens de rotation du fluide et des particules solides, afin d'évacuer le fluide (13.1, 13.2) et des ouvertures de refoulement (15), orientées dans le sens contraire, permettant de refouler à l'intérieur de la chambre annulaire les particules solides (115) qui ont été entraînées par le fluide (13.1, 13.2) et qui longent la surface intérieure de la paroi circulaire intérieure (7) en raison de la force centrifuge.

Le dispositif d'alimentation de fluide est symbolisé par une chambre d'alimentation (20) délimitée par la paroi extérieure (1) entourant la chambre annulaire (44.1, 44.2) et alimentée en fluide (4.1) et (4.2) par les tubes (5.1) et (5.2). Dans cet exemple, les ouvertures d'entrée (3) du fluide (11.1, 11.2) sont de longues fentes s'étendant d'une extrémité à l'autre du réacteur et partiellement obstruées par des inserts (23) influençant la distribution du fluide le long de la paroi circulaire (2).

Le dispositif d'évacuation de fluide (74.1) et (74.2) est symbolisé par deux tubes centraux (66.1) et (66.2) qui pénètrent dans le réacteur au travers de ses parois latérales (39.1) et (39.2).

Les fluides (68.1) et (68.2) sont évacués par l'espace annulaire qui est délimité par les extrémités de ces deux tubes centraux et qui est situé dans le même tronçon annulaire que les ouvertures de refoulement (15). Avant d'être évacué, les fluides (13.1) et (13.2) tournent autour des tubes (66.1) et (66.2). Les particules solides (115), entraînées par ces fluides, sont repoussées par la force centrifuge dans le canal circulaire de refoulement (57), qui est délimité par les parois annulaires (77) et d'où elles sont réintroduites dans la chambre annulaire (44) par les ouvertures de refoulement (15).

Les tubes (66.1) et (66.2) ont une forme évasée (76) afin de diminuer la probabilité que les fluides (68.1) et (68.2) entraînent des particules solides dans les tubes centraux d'évacuation des fluides par les ouvertures (67.1) et (67.2).

Les ouvertures de sortie (9.1, 9.2) sont de préférence éloignées des parois annulaires (77), afin de faciliter le glissement des particules solides le long de la paroi (7) à proximité du canal circulaire de refoulement (57). Dans cet exemple, la paroi circulaire intérieure (78) ne contient pas d'ouverture de sortie (9) et son diamètre augmente dans les tronçons annulaires adjacents au canal circulaire de refoulement (elle est évasée), afin de faciliter le glissement des particules solides poussées par la force centrifuge et leur force d'inertie vers les ouvertures de refoulement (15). La paroi circulaire intérieure (7) est donc bombée dans le ou les tronçons annulaires contenant les ouvertures de refoulement (15).

Le réacteur comprend un tube d'alimentation (21) de particules solides (121) dans la chambre annulaire (44) et un tube d'évacuation (22) de particules solides (122) de cette chambre annulaire (44). Un disque de séparation (79) peut diviser le canal annulaire de refoulement et l'espace entre les extrémités des deux tubes d'évacuation en deux parties afin de séparer le réacteur en deux parties reliées entre elles par l'espace annulaire compris entre le bord extérieur du disque de séparation (79) et la paroi circulaire extérieure (2) afin de permettre les échanges de particules solides entre les deux parties du lit fluidifié tout en limitant les échanges de fluide. Ce dispositif permet de faire traverser le lit fluidifié par des fluides de composition et/ou à des températures différentes.

La **figure 5** est un exemple de la coupe transversale du réacteur de la figure 3 suivant le plan AA'. Le lit fluidifié est contenu dans la chambre annulaire (44), délimitée par la paroi circulaire extérieure (2) comprenant des ouvertures d'entrée (3) permettant d'injecter tangentiellement le fluide (11) afin de faire tourner le fluide et les particules solides (56) contenues dans la dite chambre annulaire (44) et la paroi circulaire intérieure (7) comprenant des ouvertures de sortie (9), orientées dans le sens de rotation du fluide et des particules solides (56), afin d'évacuer le fluide (13.1). Le dispositif d'alimentation du fluide symbolisé par la chambre d'alimentation (20) délimitée par la paroi extérieure (1) entourant la chambre annulaire (44) et alimentée en fluide (4.1) par les tubes (5.1). Le fluide (109) doit tourner autour du tube central (66.1) dans l'espace annulaire central (90) et se déplacer longitudinalement vers son extrémité en face du canal circulaire de refoulement pour être évacué.

La **figure 6** est un exemple de la coupe transversale du réacteur de la figure 3 suivant le plan BB'. Le lit fluidifié est contenu dans la chambre annulaire (44), délimitée par la paroi circulaire extérieure (2), comprenant des ouvertures d'entrée (3) permettant d'injecter tangentiellement le fluide (11) provenant de la chambre d'alimentation (20) afin de faire tourner le fluide et les particules solides (56) contenues dans la dite chambre annulaire. La paroi circulaire intérieure (7) comprend des ouvertures de refoulement (15), orientées dans le sens de rotation du fluide et des particules solides (56) avec une composante radiale dirigée vers l'extérieur, afin de faciliter le refoulement des particules solides (115) qui tournent à l'intérieur du canal circulaire de refoulement (57), entraînées par leur force d'inertie et la force centrifuge vers la chambre annulaire (44) et de s'opposer à l'évacuation du fluide et des particules solides (56) qui tournent à l'intérieur de la chambre annulaire et qui devraient inverser leur direction d'écoulement pour pénétrer dans l'espace central au travers de l'ouverture de refoulement (15). Le fluide (68) est aspiré centralement et longitudinalement au travers des tubes d'évacuation non visibles sur cette section.

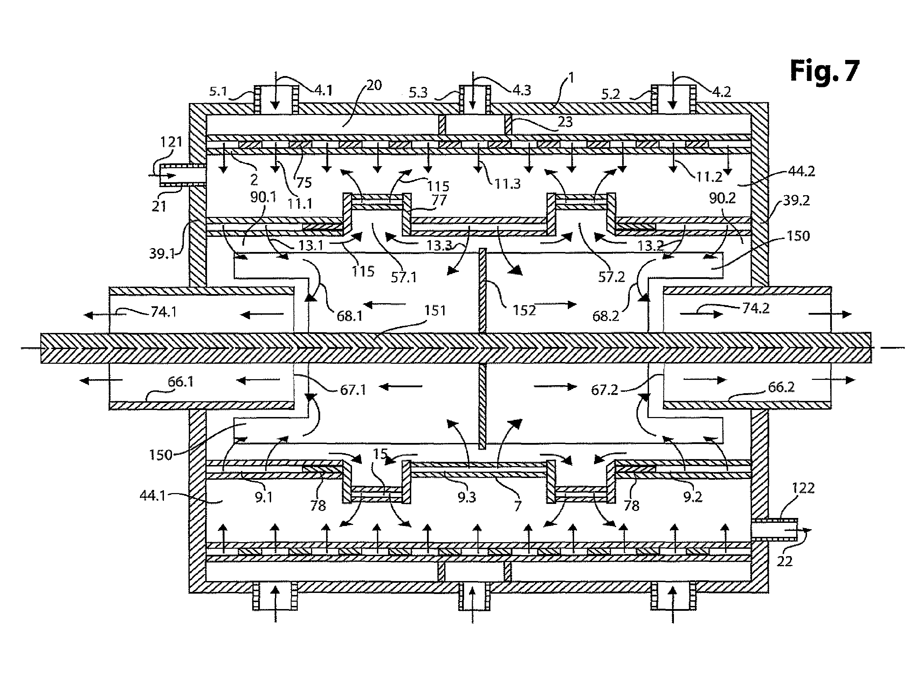

La **figure 7** est un autre exemple d'une section axiale ou longitudinale d'un dispositif à lit fluidifié rotatif comprenant une paroi circulaire intérieure (7) divisée en plusieurs tronçons annulaires et une roue à aubes (150) pouvant tourner à l'intérieur de l'espace central.

Le lit fluidifié est contenu dans la chambre annulaire (44.1, 44.2), délimitée par la paroi circulaire extérieure (2) comprenant des ouvertures d'entrée permettant d'injecter tangentiellement le fluide (11.1, 11.2, 11.3) afin de faire tourner le fluide et les particules solides (115) contenues dans la dite chambre annulaire. La paroi circulaire intérieure (7) comprend des ouvertures de sortie (9.1, 9.2, 9.3), orientées dans le sens de rotation du fluide et des particules solides avec une composante radiale dirigée vers le centre, afin d'évacuer le fluide (13.1, 13.2, 13.3) et des ouvertures de refoulement (15), orientées dans le même sens avec une composante radiale dirigée vers l'extérieur, permettant de refouler à l'intérieur de la chambre annulaire les particules solides (115) qui ont été entraînées par le fluide (13.1, 13.2, 13.3) et qui longent la surface intérieure de la paroi circulaire intérieure (7) en raison de la force centrifuge ou d'inertie.

Le dispositif d'alimentation de fluide est symbolisé par une chambre d'alimentation (20) délimitée par la paroi extérieure (1) entourant la chambre annulaire (44.1, 44.2) et alimentée en fluide (4.1)(4.2) (4.3) par les tubes (5.1),(5.2) et (5.3). Dans cet exemple, les ouvertures d'entrée du fluide (11.1, 11.2, 11.3) sont de longues fentes s'étendant d'une extrémité à l'autre du réacteur, délimitées et partiellement obstruées par des inserts (75) influençant la distribution du fluide le long de la paroi circulaire (2).

Le dispositif d'évacuation de fluide (74.1) et (74.2) est symbolisé par deux tubes centraux (66.1) et (66.2) qui pénètrent dans le réacteur au travers de ses parois latérales (75.1) et (75.2). Les fluides (68.1) et (68.2) sont évacués vers des ouvertures (67.1, 67.2) par l'espace annulaire qui est délimité par les extrémités de ces deux tubes centraux et qui est situé dans le même tronçon annulaire que les ouvertures de refoulement (15). Avant d'être évacué, les fluides (13.1) et (13.2) tournent autour des tubes (66.1) et (66.2). Les particules solides (115), entraînées par ces fluides, sont repoussées par la force centrifuge dans le canal circulaire de refoulement (57.1, 57.2) qui est délimité par les parois annulaires et d'où elles sont réintroduites par la force centrifuge ou d'inertie dans la chambre annulaire (44.1, 44.2) par les ouvertures de refoulement (15).

Les ouvertures de sortie (9.1 et 9.2) sont de préférence éloignées des parois annulaires (77), afin de faciliter le glissement des particules solides le long de la paroi (7) à proximité du canal circulaire de refoulement (57.1, 57.2).

Le réacteur comprend un tube d'alimentation (21) de particules solides (121) dans la chambre annulaire (44.1, 44.2) et un tube d'évacuation (22) de particules solides (122) de cette chambre annulaire (44.1, 44.2).

Le dispositif est pourvu d'une roue à aubes (150) pouvant tourner à l'intérieur de l'espace central dans le même sens que le sens de rotation du ou des dits fluides et des particules solides. La roue à aubes est actionnée par un arbre de transmission (151) pénétrant dans ou traversant le dit espace central. L'arbre de transmission peut faire tourner la roue à aubes (150). La paroi (152) est un disque de séparation permettant de fixer les aubes (150) de manière rigide et permettant de séparer les flux de fluides pénétrant dans la partie centrale du dispositif d'évacuation. Les aubes tournent à l'intérieur de la paroi circulaire intérieure qui est fixe. Elles sont donc très peu en contact avec les particules solides. Ce dispositif est particulièrement intéressant en raison de sa robustesse.

La **figure 8** montre une partie d'un réacteur à symétrie cylindrique périodique comprenant un dispositif d'alimentation de fluide symbolisé par une chambre d'alimentation (20) délimitée par une paroi extérieure (1) entourant la chambre annulaire (44) et alimentée en fluide (4) par les tubes (5). Le réacteur comprend un dispositif d'évacuation de fluide symbolisé par un tube central dont la paroi centrale (66.1, 66.2) comprend des ouvertures d'évacuation (67.1, 67.2) du fluide, permettant d'évacuer le fluide qui tourne dans l'espace annulaire central (90) compris entre la paroi circulaire intérieure (7, 7.1) et la paroi centrale (66.1, 66.2) du tube d'évacuation. L'utilisation d'un tube central (66) permet de garder une rotation rapide des fluides dans l'espace annulaire central (90) compris entre la paroi circulaire intérieure (7) et la paroi centrale (66) du tube d'évacuation. Dans cet exemple, le nombre d'ouvertures d'entrée (3) est le quadruple, et le nombre d'ouvertures d'évacuation (67.1, 67.2) est le double du nombre d'ouvertures de sortie (9) et de refoulement (15). Les plaques (7.1) formant des morceaux servant de déflecteur le long de la paroi circulaire intérieure 7 sont courbes. La symétrie cylindrique périodique est de 40° et 1/9 de la section transversale du réacteur est représentée, ce qui veut dire que dans cet exemple la section du réacteur illustrée est répétée 9 fois pour former le réacteur complet.

Selon un mode de réalisation particulier de l'invention, le dispositif à lit fluidifié selon la présente invention peut comprendre un dispositif d'injection ou de pulvérisation d'un liquide au travers de la paroi circulaire intérieure sur au moins une partie de la surface dudit lit fluidifié par un fluide à l'état gazeux. L'injection ou la pulvérisation d'un liquide peut aussi se faire au travers d'un déflecteur creux ou aileron disposé à l'extérieur de la paroi circulaire intérieure, par exemple en face des ouvertures de sortie ou d'évacuation.

Un tel dispositif d'injection de fluide, gazeux ou liquide, peut également être utilisé pour améliorer le refoulement des particules solides vers la chambre annulaire.

La **figure 9** montre deux périodes (400, 401, 402) de la section transversale périodique d'un réacteur à symétrie périodique de 30°, semblable à celui de la **figure 2c** comprenant des déflecteurs creux ou ailerons (85) situés à l'extérieur de la paroi circulaire intérieure (7), en face des ouvertures d'évacuation (67), orientées dans le sens de rotation (56) et délimitant avec celle-ci des ouvertures de sortie (9) et de refoulement (15).

Les dits déflecteurs creux ou ailerons (85) permettent d'injecter un fluide (87) au travers des ouvertures d'injection (86) situées à leurs extrémités en aval des ouvertures de refoulement (15). Cette injection de fluide peut générer un effet de succion sur l'ouverture de refoulement et ainsi faciliter le refoulement des particules solides (115). Elle peut permettre également d'accélérer le fluide et les particules solides le long de la surface du lit fluidifié rotatif et ainsi augmenter la force centrifuge et améliorer la séparation des particules solides et du ou des fluides avant leur pénétration au travers des ouvertures de sortie (9) situées en aval des ouvertures d'injection (86).

En outre, si le fluide (11) injecté au travers des ouvertures d'entrée (3) est un gaz, les ailerons (85) peuvent permettre de pulvériser un liquide (87), par exemple sous la forme de fines gouttelettes, sur la surface du lit fluidifié rotatif.

Ce dispositif avec déflecteurs creux est donc particulièrement adapté à l'imprégnation de particules solides d'un lit fluidifié rotatif ou à la copolymérisation catalytique dont un monomère est gazeux et un autre monomère est liquide.

En améliorant la séparation du fluide et des particules solides et en permettant de refouler les particules solides dans des zones choisies, le dispositif selon la présente invention permet d'augmenter la concentration moyenne des particules solides dans la chambre annulaire et de mieux les répartir. Des simulations ont montré que cette amélioration pouvait être substantielle. Des augmentations de plus de 10% de la concentration moyenne des particules solides dans la chambre annulaire ont été observées lorsque la paroi circulaire intérieure a des sorties de refoulement, par rapport à la concentration moyenne des particules solides dans des conditions comparables, mais dans un dispositif à lit fluidifié rotatif dont la chambre annulaire n'est pas pourvue de sorties de refoulement. L'invention se rapporte donc également à un dispositif de lit fluidifié rotatif dans lequel la concentration moyenne des particules solides dans la chambre annulaire est de plus de 30% en volume, et de préférence de plus de 35% en volume.

### PROCEDE et APPLICATIONS

La présente invention se rapporte également à un procédé d'évacuation dans un lit fluidifié rotatif de particules solides de ou des fluides, gazeux ou liquides, qui ont traversé le lit fluidifié tournant à l'intérieur d'une chambre annulaire comprenant
- l'évacuation du ou desdits fluides de ladite chambre annulaire, et
- le refoulement, grâce à la force centrifuge, vers le dit lit fluidifié de particules solides qui ont été entraînées par le ou les dits fluides évacués.

Le dispositif selon la présente invention peut être utilisé dans pratiquement tous les procédés utilisant un lit fluidifié rotatif dans une chambre annulaire, de préférence fixe.

C'est pourquoi la présente invention concerne aussi des procédés utilisant ce dispositif comme par exemple des procédés de polymérisation catalytique, de combustion, de gazéification, de classification, de séchage, d'imprégnation, d'enrobage ou d'autres traitements de particules solides en suspension dans le lit fluidifié rotatif, ou de craquage, de déshydrogénation ou d'autres transformations catalytiques de fluides.

Plus en particulier, l'invention se rapporte à un procédé de polymérisation catalytique, de combustion, de gazéification, de classification, de séchage, d'imprégnation, d'enrobage ou d'autres traitements de particules solides en suspension dans le lit fluidifié rotatif, ou de craquage, de déshydrogénation ou d'autre transformation catalytique de fluides dans un dispositif à lit fluidifié rotatif suivant la présente invention, caractérisé en ce qu'il comprend les étapes qui consistent à :
- injecter un ou des fluides dans une chambre annulaire, de préférence fixe, délimitée par une paroi circulaire extérieure, une paroi circulaire intérieure et deux côtés latéraux, et contenant des particules solides au travers d' ouvertures d'entrée de fluide réparties le long de ladite paroi circulaire extérieure de la chambre annulaire,
- évacuer le ou lesdits fluides centralement de ladite chambre annulaire par au moins une ouverture de sortie (9) de fluide le long de la dite paroi circulaire intérieure (7), de préférence orientée dans la direction de rotation du ou des fluides à l'intérieur de la dite chambre annulaire (44) avec une composante radiale dirigée vers le centre, et
- refouler, grâce à la force centrifuge, vers le dit lit fluidifié les particules solides qui ont été entraînées par le ou les dits fluides évacué par au moins une ouverture de refoulement le long de la dite paroi circulaire intérieure et qui est de préférence située en aval de ladite au moins une ouverture de sortie, et qui est de préférence orientée vers ladite chambre annulaire, de préférence dans le sens de la dite direction de rotation avec une composante radiale dirigée vers l'extérieur.

Le refoulement des particules solides dans la chambre annulaire permet d'y maintenir davantage de particules solides et donc d'y obtenir une concentration plus importante. Il permet également de prélever les particules solides de zones où leur concentration est élevée et de les réintroduire dans des zones où leur concentration est plus faible, ce qui entraîne une circulation longitudinale des particules solides à l'intérieur du lit fluidifié rotatif et assure une meilleure homogénéisation du lit fluidifié rotatif. Il permet également de réintroduire les particules solides de plus petites dimensions, qui sont plus facilement entraînées par le fluide au travers des ouvertures de sortie et donc d'obtenir un lit fluidifié stable avec des particules solides dont les dimensions ont une distribution large.

Selon un mode de réalisation particulier, le procédé est caractérisé en ce que ledit dispositif à lit fluidifié rotatif comprend un dispositif d'alimentation de particules solides et un dispositif d'évacuation de particules solides passant par un ou plusieurs tubes traversant une dite paroi latérale ou ladite paroi circulaire extérieure.

Selon un mode de réalisation particulier, le procédé est caractérisé en ce qu'il comprend l'étape qui consiste à recycler le ou lesdits fluides.

Selon un mode de réalisation particulier, le procédé est caractérisé en ce qu'il comprend l'étape qui consiste à recycler lesdites particules solides.

Selon un mode de réalisation particulier, le procédé consiste en la polymérisation catalytique d'oléfines en phase gazeuse, caractérisé en ce qu'au moins une partie des oléfines est du 1-octène. Selon un mode de réalisation particulier, le procédé comprend les étapes qui consistent à injecter un liquide sur lesdites particules solides et à faire réagir chimiquement ou physiquement ledit liquide imprégnant ou entourant lesdites particules avec le ou lesdits fluides gazeux traversant ledit lit fluidifié rotatif.

Selon un mode de réalisation particulier, ledit fluide ou mélange de fluides contient de l'éthylbenzène et ladite transformation catalytique implique sa déshydrogénation pour le transformer en styrène.

Selon un mode de réalisation particulier, lesdites particules solides sont d'origine agricole ou forestière et choisies parmi les grains, la poudre et les autres fragments.

Le dispositif selon la présente invention convient particulièrement bien aux procédés où les particules solides subissent une forte attrition, comme la combustion ou gazéification de biomasses ou autres particules carbonées et aux procédés où les particules solides grossissent substantiellement, comme la polymérisation de particules catalytiques et l'enrobage de microparticules.

La quantité de gaz traversant le lit fluidifié pouvant être de plusieurs ordres de grandeur supérieure à la quantité de gaz traversant les lits fluidifiés non rotatifs, avec des temps de résidence extrêmement courts, ce dispositif convient particulièrement bien aux procédés impliquant de très grandes vitesses de réaction ou des réactions en dehors de l'équilibre.

Le lit fluidifié pouvant être traversé par des fluides à des températures et/ou de compositions différentes ou variant progressivement, ce dispositif convient aussi pour la copolymérisation de particules catalytique ou pour l'enrobage et le séchage progressif de poudres ou de grains dont la distribution granulométrique est large.

Le très court temps de résidence du fluide dans le lit fluidifié, les variations rapides et successives de pressions permettant la respiration des particules poreuses, les différences de vitesses entre les particules solides et le fluide, ainsi que les très petites dimensions des particules solides permettent des vitesses de transferts de masse et de calories particulièrement élevées à des températures très stables. Il est particulièrement adapté aux réactions chimiques très rapides et très endothermiques ou exothermiques impliquant des micros particules ou des variations des dimensions ou du poids spécifique des particules solides, mais il permet aussi la classification, le séchage ou l'enrobage rapide de poudres fines qu'il est difficile de fluidifier par les procédés classiques.

Le dispositif selon la présente invention est particulièrement adapté à la polymérisation catalytique d'oléfines en phase gazeuse à des pressions relativement basses (voisine de la pression atmosphérique), car il permet de faire traverser le lit fluidifié rotatif par une quantité de gaz d'au moins un ordre de grandeur supérieur à la quantité de gaz traversant un lit fluidifié classique. Il est donc particulièrement adapté à la co-polymérisation d'oléfines, dans laquelle au moins une partie des oléfines est du 1-octène ainsi qu'à l'obtention de produits qui ne peuvent être obtenus qu'au travers d'une polymérisation à basse pression.

Il est également adapté aux procédés qui comprennent des étapes qui consistent à injecter un liquide sur lesdites particules solides et à faire réagir chimiquement ou physiquement (par exemple : séchage, imprégnation) ledit liquide imprégnant ou entourant lesdites particules avec le ou lesdits fluides gazeux traversant ledit lit fluidifié rotatif.

Le dispositif selon l'invention est aussi applicable à la déshydrogénation catalytique de l'éthylbenzène pour le transformer en styrène.

Enfin, il trouve des applications dans le domaine agricole, pour le traitement, en particulier le séchage, des grains, de la poudre, et des autres fragments d'origine agricole. Il trouve également des applications dans le domaine de la gazéification de biomasses, de poussières de charbon ou d'autres matières carbonées d'origine pétrolière.

C'est pourquoi un dispositif suivant la présente invention peut de manière avantageuse être utilisé dans différents procédés.

Plus en particulier, la présente invention concerne l'utilisation d'un dispositif selon la présente invention dans un procédé de polymérisation. De préférence un desdits fluides contient des alpha oléfines.

La présente invention concerne également l'utilisation d'un dispositif selon la présente invention dans un procédé de gazéification. Par exemple un dispositif selon la présente invention peut être utilisé pour la gazéification du charbon et des schistes bitumineux.

La présente invention concerne également l'utilisation d'un dispositif selon la présente invention dans un procédé de combustion de biomasses ou autres particules solides carbonées.

La présente invention concerne également l'utilisation d'un dispositif selon la présente invention dans un procédé de transformation catalytique d'un fluide ou mélange de fluides traversant un lit fluidifié rotatif dont les particules solides sont des catalyseurs. Selon un mode de réalisation particulier, ledit fluide ou mélange de fluides contient des oléfines et que ladite transformation catalytique implique le changement de la distribution des poids moléculaires desdites oléfines. Selon un autre mode de réalisation particulier, ledit fluide ou mélange de fluides contient de l'éthylbenzène et que ladite transformation catalytique implique sa déshydrogénation pour le transformer en styrène. De préférence, lesdites particules solides contiennent des composants qui peuvent réagir avec l'hydrogène provenant de ladite déshydrogénation, afin d'en réduire la concentration dans ledit fluide ou mélange de fluides, ces dits composants pouvant être régénérés à l'extérieur de ladite chambre annulaire.

La présente invention concerne aussi l'utilisation d'un dispositif selon la présente invention dans un procédé de séchage ou d'extraction de composants volatils desdites particules solides.

Un dispositif suivant la présente invention peut également être utilisé dans un procédé d'imprégnation ou d'enrobage desdites particules solides. De préférence, lesdites particules solides sont des grains, de la poudre ou autres fragments d'origine organique ou minérale.

Un dispositif suivant la présente invention peut également être utilisé dans un procédé de gazéification de biomasses, de poussières de charbon ou d'autres matières carbonées d'origine minérale ou pétrolière.

### Exemple

Un lit fluidifié rotatif homogène et stable peut être obtenu à condition que la concentration de particules solides dans le réacteur à lit fluidifié soit suffisamment élevée, ce qui implique une alimentation continue de particules solides égale ou supérieure à la quantité de particules solides entraînées par le fluide évacué. Si la concentration de particules solides est trop basse dans le réacteur, le phénomène de « chenalisation » peut se produire, ce qui augmente les pertes de particules solides par la cheminée centrale du réacteur à lit fluidifié et peut empêcher l'accumulation d'une quantité suffisante de particules solides dans la chambre annulaire. C'est pourquoi les pertes de particules solides par la cheminée centrale doivent être minimalisées.

Dans la présente invention, les pertes de particules solides peuvent être diminuées en refoulant - grâce à la force centrifuge ou d'inertie- vers le dit lit fluidifié les particules solides qui ont été entraînées par le fluide évacué de la chambre annulaire. En prévoyant des ouvertures de refoulement dans la paroi circulaire intérieure de la chambre annulaire, selon la présente invention, il est possible de refouler, grâce à la force centrifuge ou d'inertie, vers le lit fluidifié rotatif les particules solides entraînées vers la cheminée centrale.

Dans le présent exemple, la stabilité d'un lit fluidifié rotatif dans une chambre annulaire de 20mm d'épaisseur et 540mm de diamètre extérieur a été étudiée à l'aide de simulations.

Pendant le remplissage de particules solides de la chambre annulaire traversée de manière continue par un flux de gaz injecté tangentiellement afin de former un lit fluidifié rotatif trois phases peuvent être observées lorsque le dispositif d'évacuation des particules solides est fermé.

Dans une première phase le débit d'alimentation de particules solides est plus élevé que le débit de pertes de particules solides par la cheminée centrale. Les particules solides peuvent être alimentées à un débit constant dans la chambre annulaire et leur concentration augmente progressivement tant que les pertes de solides sont inférieures au débit d'alimentation.

Dans une deuxième phase, les solides sont toujours alimentés à un débit constant dans la chambre annulaire. Cependant, le débit de perte de particules solides se rapproche du débit d'alimentation de particules et la concentration de particules solides dans la chambre annulaire se rapproche de ou atteint la concentration maximale qui peut être obtenue dans les conditions décrites.

Dans une troisième phase, l'alimentation de particules solides dans la chambre annulaire est arrêtée. Les pertes de particules solides par la cheminée centrale du réacteur réduisent graduellement la concentration de particules solides dans la chambre annulaire jusqu'à ce que les pertes deviennent suffisamment faibles pour que le lit fluidifié soit considéré comme stable. Cette nouvelle limite de la concentration des particules solides est la concentration maximale de solides après l'alimentation des solides produisant un lit fluidifié rotatif stable.

Des lits fluidifiés rotatifs stables, avec des pertes de particules solides négligeables, ont été obtenus avec des concentrations moyennes des particules solides jusqu'à 35% lorsque la paroi circulaire intérieure avait des sorties de refoulement, à comparer avec une concentration moyenne d'environ 26 % dans les mêmes conditions, mais sans sorties de refoulement, les ouvertures de sortie et d'évacuation étant orientées dans le sens de rotation du lit fluidifié.

D'autres simulations dans des conditions comparables, avec des ouvertures de sortie orientée dans le sens contraire du sens de rotation, des concentrations de particules solides de près de 32% ont pu être obtenues sans ouvertures de refoulement et de 35% avec des ouvertures de refoulement.

Ces exemples montrent que les ouvertures de sortie orientées dans le sens contraire du sens de rotation du lit fluidifié permettent d'améliorer la concentration maximale de solides atteignable, mais dans une moindre mesure que les ouvertures de refoulement.

En utilisant un dispositif à lit fluidifié rotatif selon la présente invention, les concentrations (moyennes) des particules solides dans la chambre annulaire peuvent être augmentées, et peuvent même se rapprocher des concentrations maximales atteignables théoriquement. De plus, le débit des pertes de particules solides peut être substantiellement réduit et devient quasi indépendant du débit d'alimentation de solides dans la chambre annulaire pour une large gamme de concentrations de solides.

En fait, la présente invention prévoit un dispositif et un procédé permettant de réduire les pertes de particules solides vers la cheminée centrale, d'augmenter la concentration moyenne de particules solides et de les répartir de façon plus homogène dans le dispositif à lit fluidifié rotatif et en ce permet d'influencer de manière indirecte, de contrôler et de régler le temps de résidence des particules solides dans la chambre annulaire, et donc d'influencer le comportement du lit fluidifié rotatif, et les régimes selon lesquelles la chambre annulaire peut fonctionner.

## Revendications

1. Dispositif à lit fluidifié rotatif comprenant :
- un réacteur comprenant au moins une chambre annulaire (44) contenant des particules solides délimitée par une paroi circulaire extérieure (2), une paroi circulaire intérieure (7) et deux côtés latéraux (39.1, 39.2);
- un dispositif d'alimentation de particules solides dans la dite chambre annulaire (44) et un dispositif d'évacuation de particules solides de la dite chambre annulaire (44) au travers d'une ou de plusieurs de ses parois circulaires et/ou latérales;
- un dispositif d'alimentation d'un ou plusieurs fluides, gazeux ou liquides, comprenant des ouvertures d'entrée (3) de fluide (11) réparties le long de ladite paroi circulaire extérieure (2),
- un dispositif d'évacuation du ou des dits fluides comprenant au moins une ouverture de sortie (9) de fluide le long de la dite paroi circulaire intérieure (7), de préférence orientée dans la direction de rotation du ou des fluides à l'intérieur de la dite chambre annulaire (44) avec une composante radiale dirigée vers le centre,
**caractérisé en ce que** la dite paroi circulaire intérieure (7) comprend au moins une ouverture de refoulement (15), qui est de préférence située en aval de ladite au moins une ouverture de sortie, et qui est de préférence orientée vers ladite chambre annulaire, de préférence dans le sens de la dite direction de rotation avec une composante radiale dirigée vers l'extérieur.

2. Dispositif selon la revendication 1, **caractérisé en ce que** le dit dispositif d'évacuation du ou des dits fluides comprend au moins un tube central d'évacuation (66.1) pénétrant à l'intérieur de l'espace central délimité par la dite paroi circulaire intérieure (7).

3. Dispositif selon la revendication 2, **caractérisé en ce que** le dit dispositif d'évacuation du ou des dits fluides comprend au moins un autre tube central d'évacuation (66.2) pénétrant à l'intérieur du dit espace central par le côté opposé du dit espace central, leurs extrémités se faisant face.

4. Dispositif selon la revendication 2 ou 3, **caractérisé en ce qu'**au moins un des dits tubes centraux (66.1, 66.2) pénétrant dans le dit espace central a une extrémité évasée (76).

5. Dispositif selon l'une quelconque des revendications de 1 à 4, **caractérisé en ce que** le dit dispositif d'évacuation de fluide comprend un tube central d'évacuation (66) qui traverse le dit espace central délimité par la dite paroi circulaire intérieure (7) et qui comprend une ou plusieurs ouvertures d'évacuation (67).

6. Dispositif selon la revendication 5, **caractérisé en ce que** les dites ouvertures d'évacuation (67) sont orientées dans le même sens que les dites ouvertures de sortie (9).

7. Dispositif selon l'une quelconque des revendications de 1 à 6, **caractérisé en ce que** le dit espace central délimité par la dite paroi circulaire intérieure (7) est divisée en au moins deux tronçons annulaire par au moins une paroi transversale (79).

8. Dispositif selon l'une quelconque des revendications de 1 à 7, **caractérisé en ce que** le dit espace central délimité par la dite paroi circulaire intérieure (7) contient une roue à aubes (150) pouvant tourner dans le même sens que le sens de rotation du ou des dits fluides et des particules solides à l'intérieur de la dite chambre annulaire (44).

9. Dispositif selon l'une quelconque des revendications de 1 à 8, **caractérisé en ce que** au moins un tronçon annulaire de la dite paroi circulaire intérieure (7) comprend au moins une dite ouverture de sortie (9) et au moins une dite ouverture de refoulement (15).

10. Dispositif selon l'une quelconque des revendications de 1 à 8, **caractérisé en ce que** au moins un tronçon annulaire de la dite paroi circulaire intérieure (7) ne comprend qu'une ou plusieurs ouvertures de sortie (9) et au moins un autre tronçon annulaire de la dite paroi circulaire intérieure (7) ne comprend qu'une ou plusieurs ouvertures de refoulement (15).

11. Dispositif selon la revendication 10, **caractérisé en ce qu'**il comprend au moins une ouverture d'évacuation (67) dans un tronçon annulaire ne comprenant pas d'ouvertures de sortie (9).

12. Dispositif selon la revendication 10 ou 11, **caractérisé en ce que** la paroi circulaire intérieure (7) est bombée, sa partie large étant dans un tronçon annulaire qui comprend au moins une ouverture de refoulement (15) et qui ne comprend pas d'ouverture de sortie (9).

13. Dispositif suivant l'une quelconque des revendications de 1 à 12, **caractérisé en ce que** le dit dispositif d'alimentation du ou des dits fluides comprend une chambre d'alimentation (20) entourant la dite chambre annulaire (44).

14. Procédé d'évacuation dans un lit fluidifié rotatif de particules solides de ou des fluides, gazeux ou liquides, qui ont traversé le lit fluidifié tournant à l'intérieur d'une chambre annulaire comprenant l'évacuation du ou desdits fluides de ladite chambre annulaire, et le refoulement, grâce à la force centrifuge, vers le dit lit fluidifié de particules solides qui ont été entraînées par le ou les dits fluides évacués.
